# EUROPEAN PATENT APPLICATION

(11) **EP 4 786 334 A1**
(43) Date of publication of application: **05.08.2026**
(21) Application number: 24881608.4
(22) Date of filing: 22.10.2024
(51) Int. Cl.: B64C 27/08, B60F 5/02, B64C 1/30, B60P 3/11

(54) **PURE ELECTRIC AIRCRAFT AND CONTROL METHOD THEREFOR**

(30) Priority: 23.10.2023 CN 202311383016
(71) Applicant: Guangdong Huitian Aerospace Technology Co., Ltd., Guangzhou, Guangdong 511400 (CN)
(72) Inventor: SHI, Yichen, Guangzhou, Guangdong 511400 (CN); QIU, Hao, Guangzhou, Guangdong 511400 (CN); WU, Li, Guangzhou, Guangdong 511400 (CN); ZHANG, Dehu, Guangzhou, Guangdong 511400 (CN); HUANG, Jinteng, Guangzhou, Guangdong 511400 (CN)
(74) Representative: Osterhoff, Utz
(86) International application number: PCT/CN2024/126534
(87) International publication number: WO 2025/087243

(57) **Abstract**

A fully electric aircraft and a flight control method thereof are provided. The fully electric aircraft (200) includes an aircraft body (210), a frame (2210), a plurality of fixed-pitch rotors (220), and two ducted fans (230). The aircraft body (210) is provided with a manned flight cabin (2110). The frame (2210) is provided on top of the aircraft body (210). The plurality of fixed-pitch rotors (220) are spaced apart on the frame (2210) around a vertical line where a center of gravity of the aircraft (200) is located. When the aircraft body (210) is in flight, a rotation axis of each fixed-pitch rotor (220) remains fixed relative to the aircraft body (210). The two ducted fans (230) are connected to the frame (2210) and are respectively located on left and right sides of the aircraft body (210). When a yaw moment provided by the fixed-pitch rotors (220) is imbalanced, the ducted fans (230) provide a compensatory yaw moment to the aircraft body (210). When the yaw moment formed by the plurality of fixed-pitch rotors (220) is imbalanced, the fully electric aircraft (200) can provide a compensatory yaw moment to the aircraft body (210) through the two ducted fans (230), resulting in relatively high flight safety.

## Description

### CROSS-REFERENCE TO RELATED APPLICATIONS

This application claims priority to Chinese Patent Application No. 202311383016.0, filed on October 23, 2023, the entire contents of which are incorporated herein by reference.

### TECHNICAL FIELD

The present application relates to the technical field of aircrafts, and in particular, to a fully electric aircraft and a control method thereof.

### BACKGROUND

With the increasing demands in people's lives and work, flying transportation equipment has been widely used, such as passenger aircraft, helicopters, and cargo drones. Flying transportation equipment has very high requirements for its own flight power system. During flight, each component of the flight power system must operate normally to ensure the safety of passengers and the flying transportation equipment.

However, when existing flying transportation equipment experiences insufficient power in the flight power system or partial equipment malfunction, a yaw moment imbalance may occur, preventing the equipment from yawing. Existing flying transportation equipment cannot overcome the problem of being unable to yaw due to yaw moment imbalance.

### SUMMARY

The main objective of the present application is to provide a fully electric aircraft and a control method thereof, aiming to overcome the problem of being unable to achieve yaw due to yaw moment imbalance.

To achieve the above objective, in a first aspect, the present application provides a fully electric aircraft. The aircraft includes an aircraft body, a frame, a plurality of fixed-pitch rotors, and two ducted fans. The aircraft body is provided with a flight cabin for carrying crew and passengers. The frame is provided on top of the aircraft body. The plurality of fixed-pitch rotors are connected to the frame and are spaced apart around a vertical line where a center of gravity of the aircraft is located. When the aircraft body is in flight, a rotation axis of each fixed-pitch rotor remains fixed relative to the aircraft body. The two ducted fans are connected to the frame and are respectively located on left and right sides of the aircraft body. When a yaw moment provided by the fixed-pitch rotors is imbalanced, the ducted fans provide a compensatory yaw moment to the aircraft body.

In a second aspect, the present application further provides a flight control method for an aircraft. The flight control method is configured to control the flight of the aircraft. The aircraft includes an aircraft body, a plurality of fixed-pitch rotors, and two ducted fans. The plurality of fixed-pitch rotors are configured to provide lift, thrust, and yaw moment to the aircraft body. The two ducted fans are respectively located on left and right sides of the aircraft body. The flight control method includes: obtaining a target yaw moment of the aircraft; obtaining a first yaw moment generated by the plurality of fixed-pitch rotors during flight of the aircraft; when a difference between the first yaw moment and the target yaw moment is greater than a specified value, determining a compensatory yaw moment based on the difference; and controlling the ducted fans to operate based on the compensatory yaw moment, where a difference between a sum of a second yaw moment generated by the operating ducted fans and the first yaw moment, and the target yaw moment is less than or equal to the specified value.

Embodiments of the present application provide a fully electric aircraft. The aircraft includes an aircraft body, a frame, a plurality of fixed-pitch rotors, and two ducted fans. The aircraft body is provided with a flight cabin for carrying crew and passengers. The frame is provided on top of the aircraft body. The plurality of fixed-pitch rotors are connected to the frame and are spaced apart around a vertical line where a center of gravity of the aircraft is located. When the aircraft body is in flight, a rotation axis of each fixed-pitch rotor remains fixed relative to the aircraft body. The two ducted fans are connected to the frame and are respectively located on left and right sides of the aircraft body. When a yaw moment provided by the fixed-pitch rotors is imbalanced, the ducted fans provide a compensatory yaw moment to the aircraft body. To address situations where the yaw moment formed by the plurality of fixed-pitch rotors is imbalanced, such as yaw moment imbalance or failure of at least one fixed-pitch rotor, the aircraft in this embodiment further includes two ducted fans. The ducted fans are connected to the aircraft body and, when the yaw moment formed by the plurality of fixed-pitch rotors is imbalanced, can operate to provide a compensatory yaw moment to the aircraft body, thereby enabling the aircraft body to overcome the problem of being unable to yaw due to yaw moment imbalance.

### BRIEF DESCRIPTION OF THE DRAWINGS

In order to more clearly illustrate the technical solutions of the present application, the accompanying drawings required in the embodiments will be briefly introduced below. Obviously, the drawings described below are merely some embodiments of the present application. For those of ordinary skill in the art, other drawings can be obtained based on these drawings without creative labor.
FIG. 1 is a schematic structural view of a flying car according to an embodiment of the present application.
FIG. 2 is a schematic structural view showing a vehicle and an aircraft of the flying car shown in FIG. 1 in a decoupled state.
FIG. 3 is a schematic structural view of the vehicle according to an embodiment of the present application.
FIG. 4 is a schematic structural view of the aircraft according to an embodiment of the present application.
FIG. 5 is a schematic structural view of an automatic docking apparatus of the aircraft shown in FIG. 4.
FIG. 6 is a schematic structural view showing the arms folded and the landing gear mechanism deployed of the aircraft shown in FIG. 4.
FIG. 7 is a schematic structural view showing the vehicle and the aircraft of the flying car shown in FIG. 1 at the moment of initial docking.
FIG. 8 is a schematic structural view showing the aircraft moving toward the carrying platform as shown in FIG. 7.
FIG. 9 is a schematic structural view showing a center of gravity of the aircraft transferred to the carrying platform as shown in FIG. 7.
FIG. 10 is a schematic top-view structural view of the aircraft of the flying car shown in FIG. 1.
FIG. 11 is a schematic structural view of the rotor swept areas formed by the foldable rotors of the aircraft shown in FIG. 10.
FIG. 12 is a schematic structural view showing the positional relationship between the foldable rotors and the aircraft body of the aircraft shown in FIG. 10.
FIG. 13 is a schematic structural view showing the arms in a folded state of the aircraft shown in FIG. 10.
FIG. 14 is a schematic structural view showing the arms in an extended state of the aircraft shown in FIG. 10.
FIG. 15 is a schematic structural view showing the foldable rotors in an extended state of the aircraft shown in FIG. 10.
FIG. 16 is a schematic structural view showing the foldable rotors in a folded state of the aircraft shown in FIG. 10.
FIG. 17 is a schematic structural view showing the foldable rotors in an extended state of the aircraft shown in FIG. 10.
FIG. 18 is a schematic flowchart of a flight control method for an aircraft according to an embodiment of the present application.
FIG. 19 is a schematic functional block diagram of a flight control apparatus according to an embodiment of the present application.

### DETAILED DESCRIPTION OF THE EMBODIMENTS

To enable those skilled in the art to better understand the solutions of the present application, the technical solutions in the embodiments of the present application will be clearly and completely described below with reference to the accompanying drawings. Obviously, the described embodiments are only a part of the embodiments of the present application, rather than all embodiments. Based on the embodiments in the present application, all other embodiments obtained by those of ordinary skill in the art without creative work fall within the scope of the present application.

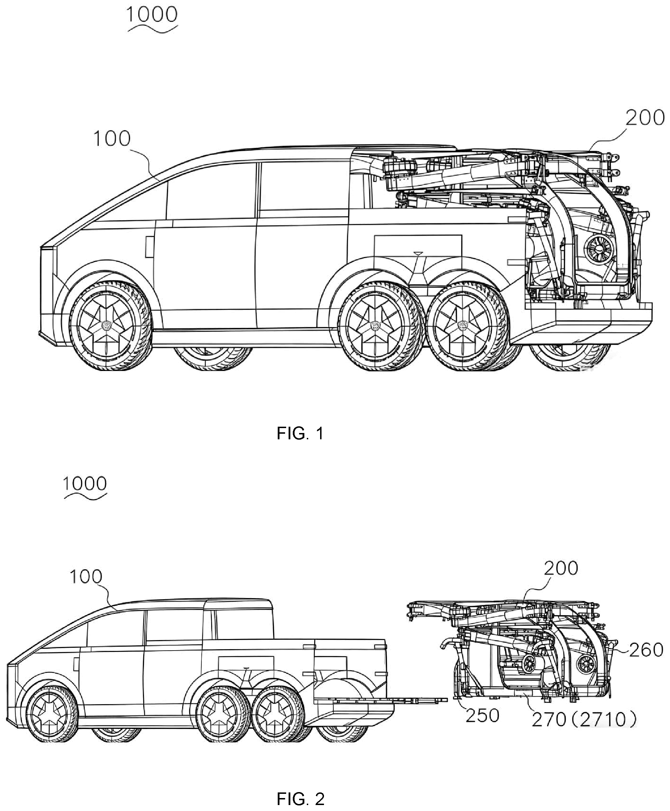

Referring to FIG. 1 and FIG. 2, this embodiment provides a flying car 1000. The flying car 1000 includes a land transportation device such as an automobile, a flying transportation device such as an aircraft, or a transportation device such as a flying car that (combines) both land and flight functions. This embodiment of the present application provides a flying car 1000 having both land and flight functions. The flying car 1000 includes a vehicle 100 and an aircraft 200, which are detachably coupled.

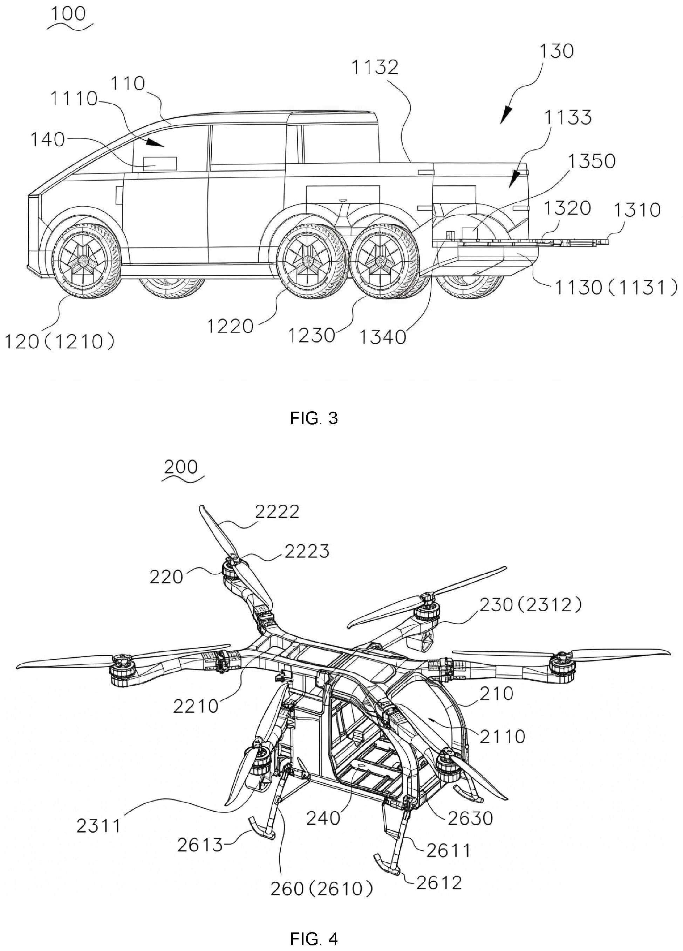

Referring to FIG. 3, the vehicle 100 in this embodiment of the present application is used for ground travel to enable the flying car 1000 to have a ground travel function. The vehicle 100 includes a vehicle body 110, a plurality of wheel assemblies 120, and an automatic docking apparatus 130. The vehicle body 110 is the main framework of the vehicle 100, bearing the load of the vehicle 100 and other functional equipment. The vehicle body 110 includes a connected ground cabin 1110 and a carrying platform 1130. The ground cabin 1110 is provided with seats for passengers, and the carrying platform 1130 is used for parking the aircraft 200. The plurality of wheel assemblies 120 are disposed on a chassis of the vehicle body 110 to enable the vehicle body 110 to travel on land. The automatic docking apparatus 130 is provided on the carrying platform 1130 of the vehicle body 110, and is used for later docking with the aircraft 200 and towing the aircraft 200.

Referring to FIG. 4, the aircraft 200 in this embodiment of the present application is used for aerial travel to enable the flying car 1000 to have an aerial travel function. The aircraft 200 and the vehicle 100 jointly construct the flying car 1000 having both land and flight functions. The aircraft 200 includes an aircraft body 210 and a plurality of foldable rotors 220 disposed on the aircraft body 210. The aircraft body 210 is the main framework of the aircraft 200, and is provided with a flight cabin 2110 for passengers. The plurality of foldable rotors 220 are disposed on the aircraft body 210 to provide power for the aircraft 200 to travel in the air. Driven by the plurality of foldable rotors 220, the aircraft 200 can ascend into the air and travel. The aircraft 200 may further include two ducted fans 230. The two ducted fans 230 are connected to the aircraft body 210 and are configured to provide a compensatory yaw moment to the aircraft body 210 when the yaw moment formed by the plurality of foldable rotors 220 is imbalanced.

In traditional flying cars 1000, during the landing process of the aircraft 200, the aircraft 200 is required to land vertically directly onto the carrying platform 1130 of the vehicle 100. On one hand, a manned aircraft 200 is relatively large and heavy, making it difficult to precisely control the attitude and motion state of the aircraft 200. On the other hand, the overall dimensions of the flying car 1000 are limited by existing road facilities and cannot be too large. Therefore, the landing plane provided by the carrying platform 1130 of the vehicle 100 is relatively small, making it difficult for the aircraft 200 to land on the carrying platform 1130 within a short time. Moreover, the rotors of the aircraft 200 are in operation, which easily leads to collisions with the vehicle 100, thereby damaging the structures of both the aircraft 200 and the vehicle 100. Even if landed on the carrying platform 1130, the position of the aircraft 200 may not meet the coupling requirements. Adjusting the relative positions of the aircraft 200 and the vehicle 100 after the aircraft 200 lands on the carrying platform 1130 not only requires overcoming the weight of the aircraft 200, but also requires considering whether the structure of the carrying platform 1130 can withstand repeated rotational movements of the aircraft 200 on it, while avoiding structural collisions between the aircraft 200 and the vehicle 100. Therefore, adjusting the position of the aircraft 200 on the carrying platform 1130 is extremely difficult, resulting in a poor user experience.

In contrast, by providing the automatic docking apparatus 130, this embodiment of the present application provides a new coupling method for the aircraft 200 and the vehicle 100. Specifically, the aircraft 200 switches from a flight state to a state of landing on the ground. Subsequently, the vehicle 100 travels near the aircraft 200, and controls the vehicle 100 to align with the aircraft 200 so as to drive the automatic docking apparatus 130 to automatically connect to the aircraft body 210, and drives the aircraft body 210 to move toward the vehicle body 110 until the aircraft body 210 is detachably coupled to the carrying platform 1130. When the aircraft 200 needs to take off, the aircraft 200 first decouples the aircraft body 210 from the carrying platform 1130 before takeoff. After decoupling, the aircraft 200 first parks on the ground, and then starts up to take off from the ground into the air, while the vehicle 100 remains on land. Therefore, the aircraft 200 in this embodiment does not require precise positioning with the carrying platform 1130, and can quickly land on the ground. Subsequently, the vehicle 100 moves to a position near the aircraft 200 and aligns with it, so that the automatic docking apparatus 130 docks with the aircraft 200 and tows it onto the carrying platform 1130. The control difficulty of coupling the aircraft body 210 with the vehicle 100 is relatively low, which increases the coupling speed between the aircraft body 210 and the carrying platform 1130, and facilitates adjusting the relative positions of the aircraft 200 and the vehicle 100. During the coupling and decoupling processes of the aircraft 200 with the carrying platform 1130, the foldable rotors 220 stop rotating, thereby improving the safety of the flying car 1000 during use.

This embodiment does not limit the degree of enclosure of the carrying platform 1130 around the aircraft 200. The aircraft 200 can be semi-enclosed or fully enclosed. In this embodiment, the shape of the vehicle 100 capable of semi-enclosing the aircraft 200 is similar to a conventional pickup truck. Specifically, the carrying platform 1130 further includes a carrying plate 1131 and a fence structure 1132. The carrying plate 1131 is connected to the ground cabin 1110, and the fence structure 1132 is annularly disposed around the outer periphery of the carrying plate 1131. When the aircraft 200 is coupled to the carrying platform 1130, the fence structure 1132 can prevent the aircraft 200 from leaving the carrying plate 1131 in a horizontal direction. The fence structure 1132, the ground cabin 1110, and the carrying plate 1131 jointly define a first accommodating space 1133 communicating with the outside. To enable the aircraft 200 to enter and exit the first accommodating space 1133, the fence structure 1132 includes a movable fence (not labeled in the drawings). The movable fence is provided on a side of the carrying plate 1131 facing away from the ground cabin 1110, and can rotate relative to the carrying plate 1131 to provide a passage for the aircraft body 210 to enter the carrying platform 1130.

In this embodiment, the shape of the vehicle 100 capable of fully enclosing the aircraft 200 is similar to a conventional box truck. Specifically, the carrying platform includes a carrying plate 1131 and a cargo box (not labeled in the drawings). The carrying plate 1131 is connected to the ground cabin 1110, and the cargo box covers the carrying plate 1131. The cargo box and the carrying plate 1131 jointly define a second accommodating space (not labeled in the drawings) isolated from the outside. To enable the aircraft 200 to enter and exit the second accommodating space, the cargo box includes a cargo door. The cargo door is movably disposed on a side of the cargo box facing away from the ground cabin 1110, and is configured to open the cargo box to allow passage for the aircraft body 210.

In this embodiment, the vehicle 100 further includes a vehicle control system 140. The vehicle control system 140 is configured to control the wheel assemblies 120. Under vehicle motion commands from the vehicle control system 140, the wheel assemblies 120 can change the motion state of the vehicle body 110, such as acceleration, deceleration, forward movement, reverse movement, etc. Similarly, the aircraft 200 further includes a flight control system 240. The flight control system 240 is configured to control the foldable rotors 220. Under aircraft motion commands from the flight control system 240, the foldable rotors 220 can change the motion state of the aircraft body 210, such as takeoff, landing, yaw, hovering, etc. Additionally, the aircraft 200 in this embodiment can travel on land to enable ground run-up, buffering, etc.

Referring to FIG. 3 and FIG. 4, in this embodiment, the vehicle control system 140 is provided inside the ground cabin 1110. The ground cabin 1110 can be understood as a passenger space and a driving space. A driver can operate the vehicle control system 140 inside the ground cabin 1110 to run the vehicle 100. The vehicle control system 140 may include one or more structures such as a driving dashboard, a steering wheel, an accelerator, a brake, a gear lever, etc. The flight control system 240 is provided inside the flight cabin 2110. The flight control system 240 includes one or more structures such as a flight dashboard, a central console, and an aircraft control stick. In some embodiments, the vehicle control system 140 and the flight control system 240 can be communicatively connected to mutually transmit motion data or motion state information of the vehicle 100 and the aircraft 200. In other embodiments, the vehicle 100 is an autonomous transportation device, so the position of the vehicle control system 140 is not specifically limited. The vehicle control system 140 may be disposed at a position on the vehicle body 110 other than the ground cabin 1110, or may be disposed inside the ground cabin 1110 for passengers to assist in driving the vehicle 100. If the aircraft 200 is also an autonomous transportation device, it is configured similarly to the vehicle 100, and details are not repeated here.

Next, the specific structures used for docking and coupling between the vehicle 100 and the aircraft 200 will be introduced, along with how the vehicle 100 and the aircraft 200 achieve docking and coupling through these specific structures.

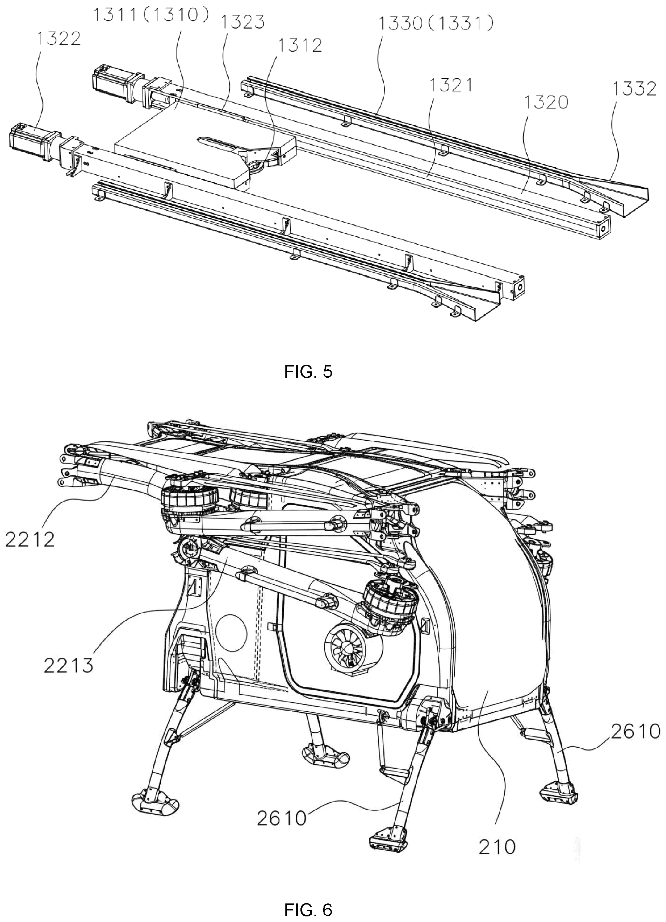

Referring to FIG. 5, the automatic docking apparatus 130 in this embodiment includes a towing mechanism 1310 and a linear motion mechanism 1320. The towing mechanism 1310 is movably provided on the carrying platform 1130. When the vehicle 100 controls the carrying platform 1130 to align with the aircraft body 210, the movement trend of the towing mechanism 1310 is toward or away from the aircraft body 210. The structural basis for the towing mechanism 1310 to move along a fixed direction is the linear motion mechanism 1320. The linear motion mechanism 1320 is provided on the carrying platform 1130. The towing mechanism 1310 is connected to the linear motion mechanism 1320, which is configured to drive the towing mechanism 1310 to move on the carrying platform. Correspondingly, the aircraft 200 further includes a docking mechanism 250 (see FIG. 2) connected to the aircraft body 210. The docking mechanism 250 is adapted to cooperatively connect with the towing mechanism 1310. After the towing mechanism 1310 and the docking mechanism 250 are cooperatively connected, the towing mechanism 1310 tows the docking mechanism 250 to pull the aircraft 200 onto the carrying platform 1130.

Referring to FIG. 5, the specific components of the linear motion mechanism 1320 will first be introduced to reveal the mechanism by which the linear motion mechanism 1320 drives the towing mechanism 1310 to move. Specifically, the linear motion mechanism 1320 includes a lead screw 1321, a rotation motor 1322, and a slider block 1323. The lead screw 1321 is provided along the forward direction of the vehicle 100. The rotation motor 1322 is drivingly connected to one end of the lead screw 1321. When the rotation motor 1322 is activated, it can drive the lead screw 1321 to rotate. The slider block 1323 is threadedly connected to the lead screw 1321 and is connected to the towing mechanism 1310. When the carrying platform 1130 moves to a position opposite to the aircraft body 210, the lead screw 1321 rotates, and the slider block 1323, together with the towing mechanism 1310, moves toward or away from the aircraft body 210 relative to the carrying platform 1130. In this embodiment, the number of linear motion mechanisms 1320 is two. The two linear motion mechanisms 1320 and the towing mechanism 1310 are arranged horizontally to avoid increasing the height of the carrying platform 1130, preventing the overall structure of the flying car 1000 from being too tall and incompatible with existing traffic facilities and building structures (the overall dimensions of the flying car 1000 will be specifically defined later). The two linear motion mechanisms 1320 are disposed on opposite sides of the towing mechanism. On one hand, this provides greater driving force to the towing mechanism 1310; on the other hand, it helps maintain the towing mechanism 1310 in a roughly balanced state, making it less prone to tilting or deflection, thereby ensuring towing effectiveness.

Referring to FIG. 5, the specific structure of the towing mechanism 1310 and the specific structure of the docking mechanism 250 of the aircraft 200 will be introduced next. Specifically, the towing mechanism 1310 includes a towing main body 1311 and a towing ring 1312. Correspondingly, the docking mechanism 250 of the aircraft 200 includes a mating ring (not labeled in the drawings). The towing ring 1312 is provided on a side of the towing main body 1311 facing away from the ground cabin 1110, so that when the carrying platform 1130 moves to a position opposite to the aircraft body 210, the towing ring 1312 and the mating ring are oppositely disposed and can interlock with each other. In other embodiments, the towing mechanism 1310 and the docking mechanism 250 may also be hook-shaped structures.

To enable the towing ring 1312 and the mating ring to interlock, in this embodiment, a portion of the towing ring 1312 is exposed on the side of the towing main body 1311 facing away from the ground cabin 1110. The towing ring 1312 is provided with a gap and is rotatably disposed on the towing main body 1311. The towing ring 1312 can rotate around its axis. When the towing ring 1312 and the mating ring are oppositely disposed, the towing ring 1312 can rotate so that the gap aligns with the mating ring, allowing the mating ring and the towing ring 1312 to interlock. Subsequently, the towing ring 1312 continues to rotate, hiding the gap inside the towing main body 1311, thereby ensuring the stability of the interlocking relationship between the mating ring and the towing ring 1312.

Referring to FIG. 5, after the aircraft 200 is towed onto the carrying platform 1130 and before the aircraft body 210 is coupled to the carrying platform 1130, the movement direction of the aircraft body 210 relative to the vehicle body 110 is kept as straight as possible. Therefore, the automatic docking apparatus 130 in this embodiment further includes two guide slots 1330. Both guide slots 1330 are horizontally provided on the carrying platform 1130 and extend along the forward direction of the vehicle 100. Correspondingly, mating wheel assemblies (not labeled in the drawings) are provided on opposite sides of the bottom of the aircraft body 210. When the carrying platform 1130 moves to a position opposite to the aircraft body 210, the two guide slots 1330 and the two mating wheel assemblies are oppositely disposed one-to-one. Each mating wheel assembly can slide into a corresponding guide slot 1330 and roll within it, thereby restricting the movement trajectory of the aircraft body 210.

Referring to FIG. 5, to facilitate the mating wheel assemblies sliding into the corresponding guide slots 1330, the guide slots 1330 in this embodiment include a connected first slot body 1331 and a second slot body 1332. The second slot body 1332 is connected to an end of the first slot body 1331 facing away from the ground cabin 1110. The slot width of the second slot body 1332 gradually increases in a direction away from the ground cabin 1110. That is, the end of the second slot body 1332 closer to the mating wheel assemblies has a wider slot width, allowing the mating wheel assemblies to smoothly slide into the second slot body 1332.

After the mating wheel assemblies slide into the guide slots 1330, the towing mechanism 1310 tows the aircraft body 210 to move in a straight line. The movement direction of the mating wheel assemblies may not necessarily align with the extension direction of the guide slots 1330, which could cause the mating wheel assemblies to jam in the guide slots 1330. Therefore, in this embodiment, the mating ring is rotatably connected to a side of the chassis of the aircraft body 210 facing the ground. The mating ring can rotate relative to a vertical line of the chassis of the aircraft body 210. During the towing process of the aircraft body 210 by the towing ring 1312, the mating ring adjusts the movement direction of the mating wheel assemblies, ensuring smooth cooperation between the mating wheel assemblies and the guide slots 1330.

Referring to FIG. 3, the automatic docking apparatus 130 in this embodiment further includes a limit mechanism 1340. The application scenario of the limit mechanism 1340 is as follows: when the aircraft body 210 is coupled to the carrying platform 1130, the limit mechanism 1340 is connected between the aircraft body 210 and the carrying platform 1130 to restrict the aircraft body 210 from moving in any direction relative to the carrying platform 1130. Specifically, the limit mechanism 1340 in this embodiment includes a horizontal limit assembly (not labeled in the drawings). The horizontal limit assembly may be connected between the carrying platform 1130 and the aircraft body 210, or between the vehicle body 110 and the aircraft body 210. The horizontal limit assembly is configured to restrict the aircraft body 210 from moving horizontally relative to the carrying platform 1130, for example, restricting the aircraft body 210 from shaking forward and backward or swaying left and right along the forward direction of the vehicle body 110. The limit mechanism 1340 in this embodiment further includes a vertical limit assembly (not labeled in the drawings). The vertical limit assembly is connected between the carrying platform 1130 and the aircraft body 210 to restrict the aircraft body 210 from moving vertically relative to the carrying platform 1130. The provision of the limit mechanism 1340 stabilizes the positional state of the aircraft body 210 on the carrying platform 1130, ensuring the stability of the fixed connection relationship between the aircraft body 210 and the carrying platform 1130. By restricting the movement of the aircraft body 210 on the carrying platform 1130, the limit mechanism 1340 can reduce impact damage caused by the movement of the aircraft body 210 to both the aircraft 200 itself and the vehicle 100.

This embodiment does not limit the types and specific structures of the horizontal limit assembly and the vertical limit assembly. They may be cooperatively connected hook-and-ring structures, or blocking blocks that restrict movement. In this embodiment, an electric limit mechanism 1340 may be selected. When the aircraft body 210 is coupled to the carrying platform 1130, the electric limit mechanism connects to the aircraft body 210 to restrict its movement. Before the aircraft body 210 needs to take off, the electric limit mechanism disconnects the connection between the carrying platform 1130 or the vehicle body 110 and the aircraft body 210.

Referring to FIG. 3, to reduce damage to the aircraft 200 itself and the vehicle 100 caused by vibrations of the aircraft body 210, the automatic docking apparatus 130 in this embodiment further includes a buffering mechanism 1350. The buffering mechanism 1350 is provided on the carrying platform 1130. When the aircraft body 210 is coupled to the carrying platform 1130, the buffering mechanism 1350 is located between the aircraft body 210 and the carrying platform 1130, and also between the aircraft body 210 and the vehicle body 110. The buffering mechanism 1350 can mitigate impact damage to the vehicle body 110 and the aircraft body 210 caused by shaking of the aircraft body 210. This embodiment does not specifically limit the type and specific structure of the buffering mechanism 1350. The buffering mechanism 1350 may be a damper or a hydraulic buffer.

Referring to FIG. 4 and FIG. 6, the aircraft 200 in this embodiment further includes a landing gear mechanism 260. The landing gear mechanism 260 is configured to support the aircraft body 210 when the aircraft 200 is in a landed state. The landing gear mechanism 260 is rotatably connected to the aircraft body 210. When the aircraft 200 is in flight, the landing gear mechanism 260 rotates toward the aircraft body 210 to form a folded state, which can reduce air resistance experienced by the aircraft body 210 in the air. When the aircraft 200 is about to land on the ground, the landing gear mechanism 260 can rotate relative to the aircraft body 210 to form a supporting state and can support on the ground. In other embodiments, structures such as airbags or cushion blocks may also be configured to achieve the landing of the aircraft body 210.

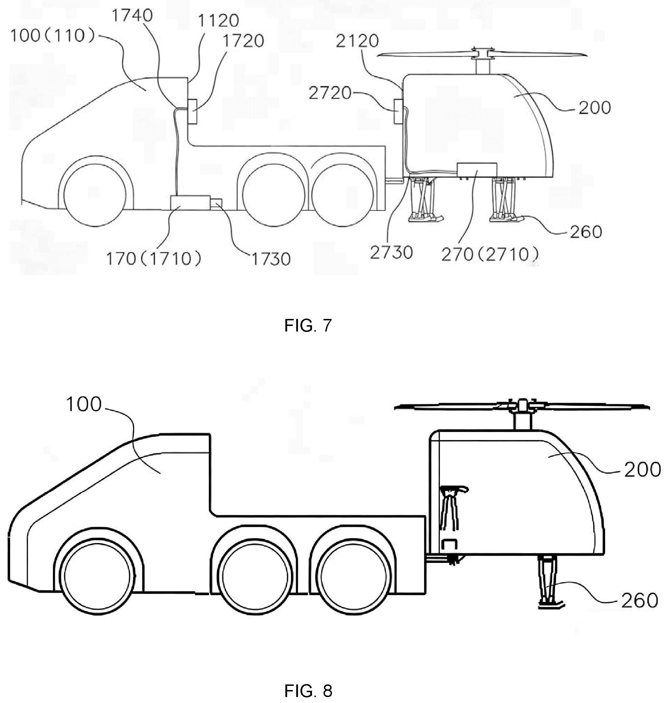

Referring to FIG. 7, to ensure that the left and right sides of the aircraft body 210 along the forward direction of the aircraft 200 are relatively balanced when the aircraft body 210 is in a landed state, the landing gear mechanism 260 in this embodiment includes two landing gears 2610. The two landing gears 2610 are respectively rotatably connected to the left and right sides of the aircraft body 210. Each landing gear 2610 can rotate relative to the aircraft body 210 to deploy or fold. In other embodiments, the landing gear mechanism 260 may be an integral structure. When the aircraft 200 is in a landed state, this integral landing gear mechanism 260 can simultaneously support both the left and right sides of the aircraft body 210.

Referring to FIG. 4, to ensure that the landing gears 2610 can automatically deploy or fold, the landing gear mechanism in this embodiment further includes at least two actuators 2630. The two actuators 2630 are disposed in one-to-one correspondence with the two landing gears 2610. Each actuator 2630 connects the aircraft body 210 and a corresponding landing gear 2610. The actuator 2630 can automatically drive the landing gear 2610 to rotate relative to the aircraft body 210 according to the travel state of the aircraft 200, so that the landing gear 2610 forms a folded state or a deployed state relative to the aircraft body 210 without manual intervention, thereby improving safety. The actuator 2630 in this embodiment may be a hydraulic cylinder or a linear motor, etc.

Referring to FIG. 4, the landing gear 2610 in this embodiment includes a support rod 2611 and a support foot 2612. The support rod 2611 is connected between the support foot 2612 and the aircraft body 210. When the landing gear mechanism 260 is in a supporting state, the support foot 2612 abuts against the ground and supports the aircraft body 210 upward. The support foot 2612 is a rod-shaped structure and is provided substantially along the forward direction of the aircraft 200. At least one of the front and rear ends of the support foot 2612 in the forward direction of the aircraft 200 curves upward away from the ground. The curved portion forms an arc-shaped edge 2613 on the side of the support foot 2612 facing the ground. During the landing process of the aircraft 200 on the ground, the support foot 2612 can adapt to the ground through the arc-shaped edge 2613, and can avoid intense collisions between foreign objects on the ground and the support foot 2612, thereby preventing abnormal vibrations of the aircraft body 210 and preventing damage to the support foot 2612 and the aircraft body 210.

After the towing mechanism 1310 on the carrying platform 1130 and the docking mechanism 250 on the aircraft body 210 are docked, the towing mechanism 1310 tows the aircraft body 210 to move toward the carrying platform 1130 until the aircraft body 210 is coupled to the carrying platform 1130. Therefore, the process of the aircraft body 210 moving from being independent of the carrying platform 1130 to being coupled to the carrying platform 1130 is gradual. When the aircraft body 210 has not yet mostly moved onto the carrying platform 1130, or when the center of gravity of the aircraft body 210 has not yet moved to a safe position on the carrying platform 1130, the landing gear mechanism 260 still needs to be provided between the aircraft body 210 and the ground to maintain the balance of both the aircraft body 210 and the vehicle 100. In this embodiment, the aircraft 200 includes at least two sets of landing gear mechanisms 260. The two sets of landing gear mechanisms 260 are spaced apart along the forward direction of the aircraft 200 on the aircraft body 210. One set is closer to the carrying platform 1130, and the other is farther from the carrying platform 1130. That is, one set of landing gear mechanisms 260 is located at the front end of the aircraft body 210, and the other set is located at the rear end of the aircraft body 210. Each set of landing gear mechanisms 260 may include two landing gears 2610, which are respectively located on the left and right sides of the aircraft body 210. It should be understood that in other embodiments, more landing gear mechanisms 260 may be provided according to the weight and length of the aircraft body 210.

In this embodiment, during the process of the aircraft body 210 moving from being independent of the carrying platform 1130 to being coupled to the carrying platform 1130, the two sets of landing gear mechanisms 260 fold sequentially. The folding timing of the two sets of landing gear mechanisms 260 will be detailed below.

Referring to FIG. 7 and FIG. 8, initially, both sets of landing gear mechanisms 260 are in a supporting state. As the aircraft body 210 is towed by the towing mechanism 1310, a smaller portion of the aircraft body 210 moves onto the carrying platform 1130 and receives support from the carrying platform 1130. When the carrying platform 1130 and the landing gear mechanism 260 farther from the carrying platform 1130 can overcome the weight of the aircraft body 210 and maintain it in a balanced state, the landing gear mechanism 260 closer to the carrying platform 1130 folds and retracts to switch to a folded state.

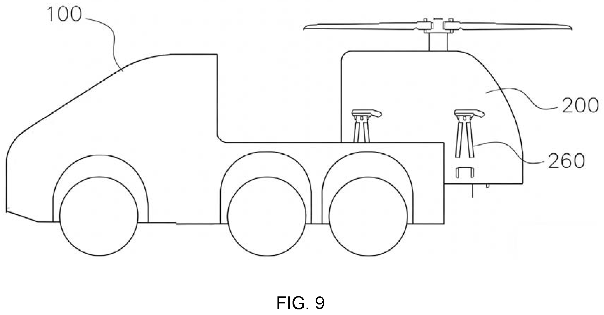

Referring to FIG. 9, the towing mechanism 1310 continues to tow the aircraft body 210 toward the carrying platform 1130. When most of the structure of the aircraft body 210 has moved onto the carrying platform 1130, and the center of gravity of the aircraft body 210, the carrying platform 1130, and the vehicle body 110 reach a balanced state (i.e., the carrying platform 1130 can independently support the aircraft body 210 without assistance from the landing gear mechanism 260 farther from the carrying platform 1130), the landing gear mechanism 260 farther from the carrying platform 1130 folds and retracts to switch to a folded state.

Finally, the towing mechanism 1310 continues to tow the aircraft body 210 toward the carrying platform 1130 until the aircraft body 210 moves to a specified coupling position on the carrying platform 1130. Subsequently, the aircraft body 210 is coupled to the carrying platform 1130.

Referring again to FIG. 7, the vehicle 100 in this embodiment is a pure electric vehicle. The vehicle 100 further includes a vehicle electrical system 170. The vehicle electrical system 170 is provided on the vehicle body 110 and is electrically connected to the plurality of wheel assemblies 120 to provide electrical energy to them, enabling the plurality of wheel assemblies 120 to drive the vehicle body 110 to travel on land. In other embodiments, the vehicle 100 may also be a range-extended electric vehicle, meaning that in addition to the vehicle electrical system 170, the vehicle 100 further includes a fuel generator. Similarly, the aircraft 200 in this embodiment is a fully electric aircraft or a pure electric manned helicopter. The aircraft 200 further includes a flight electrical system 270. The flight electrical system 270 is provided on the aircraft body 210 and is electrically connected to the plurality of foldable rotors 220 to provide electrical energy to them, enabling the foldable rotors 220 to drive the aircraft body 210 to travel in the air.

Specifically, the vehicle electrical system 170 in this embodiment includes a first power battery pack 1710. The first power battery pack 1710 is provided on the vehicle body 110 and is configured to store electrical energy to supply power to the land propulsion system and other electrical components on the vehicle 100. The flight electrical system 270 includes a second power battery pack 2710. The second power battery pack 2710 is provided on the aircraft body 210 and is configured to store electrical energy to supply power to the foldable rotors 220 and other electrical components on the aircraft 200. This embodiment does not limit the types of the first power battery pack 1710 and the second power battery pack 2710. They may be acidic lithium batteries or alkaline zinc-manganese batteries.

In some embodiments, the vehicle electrical system 170 and the flight electrical system 270 are independent of each other, and no electrical energy is transferred between the first power battery pack 1710 and the second power battery pack 2710. In this embodiment, the first power battery pack 1710 and the second power battery pack 2710 are structurally independent, but when the aircraft body 210 is coupled to the carrying platform 1130, electrical energy can be transferred between the first power battery pack 1710 and the second power battery pack 2710. Specifically, the vehicle electrical system 170 further includes a first connector 1720 electrically connected to the first power battery pack 1710. The flight electrical system 270 further includes a second connector 2720 electrically connected to the second power battery pack 2710. When the aircraft body 210 is coupled to the carrying platform 1130, the first connector 1720 and the second connector 2720 are electrically connected, allowing electrical energy to be transferred between the first power battery pack 1710 and the second power battery pack 2710. This enables the first power battery pack 1710 to be supplemented with electrical energy from the second power battery pack 2710, or vice versa. Additionally, both the first power battery pack 1710 and the second power battery pack 2710 in this embodiment are provided with power connection ports to accept electrical energy supplementation from external power sources of the transportation carrier.

First, the scenario where the first power battery pack 1710 supplements electrical energy to the second power battery pack 2710 is introduced. After the aircraft 200 completes flight and is coupled to the carrying platform 1130, the first connector 1720 connected to the first power battery pack 1710 can supplement electrical energy to the second power battery pack 2710 through the second connector 2720, so that the flight electrical system 270 stores sufficient electrical energy for the next flight of the aircraft 200. Specifically, the vehicle electrical system 170 further includes an energy management module 1730. The energy management module 1730 is electrically connected to the first power battery pack 1710. When the energy management module 1730 detects that the aircraft body 210 and the carrying platform 1130 are in a coupled state, it can control the first power battery pack 1710 to supplement electrical energy to the second power battery pack 2710.

Next, the scenario where the second power battery pack 2710 supplements electrical energy to the first power battery pack 1710 is introduced. The flying car 1000 in this embodiment further includes a power sensor (not labeled in the drawings) and a vehicle controller (not labeled in the drawings), which are electrically connected. The power sensor is configured to detect the remaining power levels of the first power battery pack 1710 and the second power battery pack 2710. The vehicle controller is configured to control whether the second power battery pack 2710 transmits electrical energy to the first power battery pack 1710. When the vehicle 100 and the aircraft 200 are in a coupled state and the vehicle 100 is traveling, if the power sensor detects that the remaining power level of the first power battery pack 1710 is low, the vehicle controller controls the second power battery pack 2710 to transmit electrical energy to the first power battery pack 1710. This embodiment specifically introduces two specific manifestations of insufficient power in the first power battery pack 1710.

The first specific manifestation: the power sensor detects the remaining power level of the first power battery pack 1710. The vehicle controller estimates the driving range of the vehicle 100 based on the remaining power level of the first power battery pack 1710. If the driving range of the vehicle 100 is lower than a target driving range, it indicates that the electrical energy in the first power battery pack 1710 is insufficient to support the flying car 1000 to travel to the target destination. Under the above circumstances, it can be determined that the remaining power level of the first power battery pack 1710 is insufficient. Subsequently, the power sensor detects the remaining power level of the second power battery pack 2710. If the remaining power level of the second power battery pack 2710 is greater than or equal to a second preset power level (i.e., the electrical energy in the second power battery pack 2710 is sufficient), the vehicle controller controls the second power battery pack 2710 to supplement electrical energy to the first power battery pack 1710.

The second specific manifestation: the flying car 1000 in this embodiment further includes an acceleration sensor (not labeled in the drawings), which is configured to detect the actual acceleration of the vehicle 100. When the actual acceleration of the vehicle 100 is less than or equal to a preset acceleration, it indicates that the remaining power level of the first power battery pack 1710 is insufficient and lacks sufficient electrical energy to enable the vehicle 100 to reach a preset travel speed within a preset time. Subsequently, the power sensor detects the remaining power level of the second power battery pack 2710. If the remaining power level of the second power battery pack 2710 is greater than or equal to the second preset power level (i.e., the electrical energy in the second power battery pack 2710 is sufficient), the vehicle controller controls the second power battery pack 2710 to supplement electrical energy to the first power battery pack 1710.

Both of the above scenarios where the second power battery pack 2710 supplements electrical energy to the first power battery pack 1710 require that the remaining power level in the second power battery pack 2710 be sufficient, i.e., greater than or equal to the second preset power level. In special cases, even if the remaining power level in the second power battery pack 2710 is less than the second preset power level, the second power battery pack 2710 can still supplement power to the first power battery pack 1710. However, when the power level in the second power battery pack 2710 drops to a preset minimum power level, the transmission of electrical energy to the first power battery pack 1710 is stopped, and the first power battery pack 1710 needs to seek other power supply devices for supplementation.

Referring to FIG. 7, this embodiment does not limit the positional arrangement of the first connector 1720 and the second connector 2720. They are specifically arranged according to the actual orientation between the vehicle body 110 and the aircraft body 210. As mentioned earlier, the vehicle body 110 and the carrying platform 1130 in this embodiment are arranged side-by-side along the forward direction of the vehicle 100. When the aircraft body 210 is coupled to the carrying platform 1130, the aircraft body 210 and the vehicle body 110 are also arranged side-by-side along the forward direction of the vehicle 100. Furthermore, in this embodiment, the front orientation of the aircraft body 210 and the front orientation of the vehicle body 110 are opposite and roughly parallel. Therefore, in this embodiment, the first connector 1720 is provided on a side of the vehicle body 110 facing the aircraft body 210. Correspondingly, the second connector 2720 is provided on a side of the aircraft body 210 facing the vehicle body 110, so that when the aircraft body 210 and the carrying platform 1130 are in a coupled state, the first connector 1720 and the second connector 2720 can be oppositely disposed and easily connected.

Specifically, the vehicle body 110 in this embodiment has a first back plate 1120 facing the aircraft body 210. That is, the first back plate 1120 is provided facing the carrying platform 1130. The first connector 1720 is provided on the first back plate 1120 to correspond to the carrying platform 1130 and the aircraft body 210. Correspondingly, the aircraft body 210 has a second back plate 2120 facing the vehicle body 110. The second connector 2720 is provided on the second back plate 2120 to correspond to the vehicle body 110. When the aircraft body 210 is coupled to the carrying platform 1130, the first back plate 1120 is opposite to the second back plate 2120. The first connector 1720 is opposite to and electrically connected to the second connector 2720, thereby achieving mutual transfer of electrical energy between the first power battery pack 1710 and the second power battery pack 2710.

This embodiment does not specifically limit the positional arrangement of the first power battery pack 1710 and the second power battery pack 2710. In this embodiment, the first power battery pack 1710 is fixedly disposed on the chassis of the vehicle body 110 and located inside the vehicle body 110. This ensures that the relatively heavy first power battery pack 1710 remains stable, guaranteeing the power supply of the vehicle 100 and the structural stability of the vehicle body 110. A first high-voltage harness 1740 is provided between the first power battery pack 1710 and the first connector 1720. The first high-voltage harness 1740 extends along the structure of the chassis of the vehicle body 110 and the first back plate 1120 and is electrically connected between the first power battery pack 1710 and the first connector 1720 to provide conditions for electrical energy transmission. Similarly, the second power battery pack 2710 is fixedly disposed on the chassis of the aircraft body 210 and located inside the aircraft body 210. A second high-voltage harness 2730 is provided between the second power battery pack 2710 and the second connector 2720. The second high-voltage harness 2730 extends along the structure of the chassis of the aircraft body 210 and the second back plate 2120 and is electrically connected between the second power battery pack 2710 and the second connector 2720. In other embodiments, the first power battery pack 1710 may be disposed in the ground cabin 1110, and the second power battery pack 2710 may be disposed in the flight cabin 2110.

Referring again to FIG. 3, the plurality of wheel assemblies 120 in this embodiment include a first wheel assembly 1210, a second wheel assembly 1220, a third wheel assembly 1230, and a vehicle drive motor. The first wheel assembly 1210, the second wheel assembly 1220, and the third wheel assembly 1230 are all disposed on a side of the vehicle body 110 facing the ground. At least one of the first wheel assembly 1210, the second wheel assembly 1220, and the third wheel assembly 1230 is driven by the vehicle drive motor. In some embodiments, the number of wheel assemblies may also be four, five, six, etc. The number of wheel assemblies 120 is comprehensively considered and arranged based on the overall weight of the flying car 1000 and the load-bearing capacity of the wheel assemblies 120. In this embodiment of the present application, each wheel assembly 120 refers to a wheel group sharing a single wheel axle. Each wheel assembly 120 may include multiple wheels, for example, two wheels, or four, six, eight wheels, etc. The multiple wheels in each wheel assembly 120 are symmetrically disposed at opposite ends of the same wheel axle.

In this embodiment, the positional distribution of each wheel assembly 120 is arranged according to the weight borne by each part of the vehicle 100 when the aircraft 200 and the vehicle 100 are coupled. Specifically, the first wheel assembly 1210 is correspondingly disposed with the ground cabin 1110 of the vehicle body 110 to support the ground cabin 1110. The second wheel assembly 1220 and the third wheel assembly 1230 are correspondingly disposed with the carrying platform 1130 to support the carrying platform 1130. In other embodiments, the first wheel assembly 1210, the second wheel assembly 1220, and the third wheel assembly 1230 may be equally spaced at the bottom of the vehicle body 110.

Referring again to FIG. 4, the aircraft 200 in this embodiment further includes a frame 2210. The frame 2210 is provided on the aircraft body 210 and serves as a connecting medium between the aircraft body 210 and the plurality of foldable rotors 220. The plurality of foldable rotors 220 are disposed on the frame 2210 and are configured to provide lift, thrust, and yaw moment to the aircraft body 210, enabling the aircraft body 210 to perform actions such as takeoff, landing, forward movement, and yaw. In this embodiment, the plurality of foldable rotors 220 are selected to have the same output power. Using multiple foldable rotors 220 with the same rated output power places relatively lower requirements on the overall structure of the aircraft 200, which can reduce the complexity of the overall structure of the aircraft 200 and decrease development costs. In other embodiments, the plurality of foldable rotors 220 may be a combination of foldable rotors 220 with various rated output powers. The advantage lies in the ability to develop more functional flight modes. For example, in such flight modes, the aircraft 200 can fly in harsh environments and climates, improving the aircraft's adaptability to flight environments and enhancing its market competitiveness.

The structure of the foldable rotors 220 in this embodiment remains stable relative to the aircraft body 210, which can simplify the installation structure of the foldable rotors 220. The fixed position of the foldable rotors 220 is specifically manifested as follows: each foldable rotor 220 has a rotation axis, which is the rotational axis of the rotor blades of the foldable rotor 220. In the flight state, the rotation axis of the foldable rotor 220 remains fixed relative to the aircraft body 210. Therefore, the foldable rotors 220 in this embodiment may also be referred to as fixed-pitch rotors.

When the aircraft 200 is in the level flight state, the angle between the rotation axis of the foldable rotor 220 in this embodiment and a vertical plane is roughly less than or equal to 10°. The arrangement of the plurality of foldable rotors 220 varies. For ease of understanding, the angle range of the rotation axes of the foldable rotors will be detailed later in specific usage environments, and will not be elaborated here.

To improve the aircraft's 200 ability to handle emergencies during aerial travel and enhance flight safety, this embodiment makes specific arrangements regarding the number of foldable rotors 220, their distribution on the aircraft body 210, their structure, and the compensation mechanism for abnormal conditions of the foldable rotors 220. These will be detailed below.

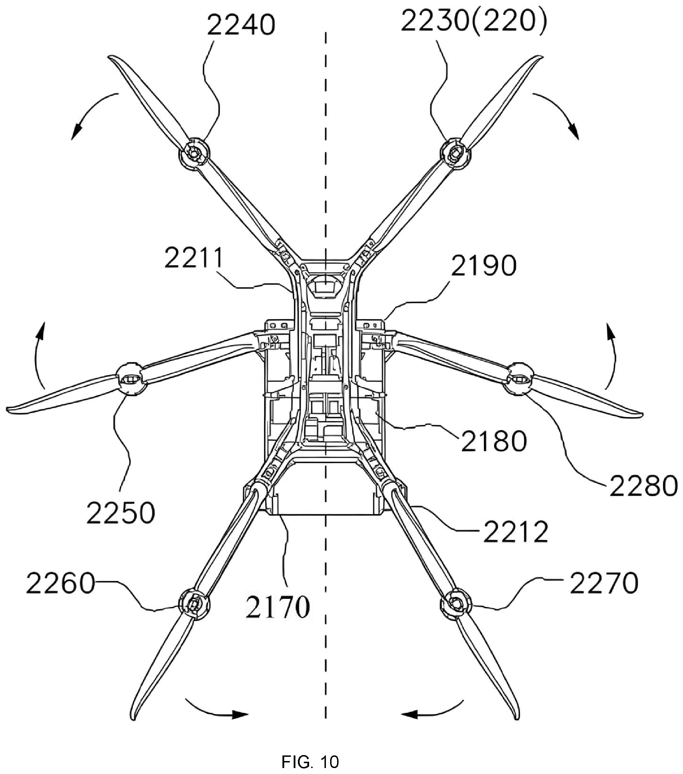

Referring to FIG. 10, in this embodiment, there is a vertical plane within the vertical plane defined by the forward direction of the aircraft body 210 that serves as an axial plane of the aircraft body 210. The aircraft body 210 is symmetrical about this axial plane. The two sides of the aircraft body 210 in its forward direction are defined as the left and right sides of the aircraft body 210. The weights of the left and right sides of the aircraft body 210 are roughly the same or differ slightly, keeping the left and right parts of the aircraft body 210 basically in a balanced state. The number of foldable rotors 220 may be even or odd. In this embodiment, the number of foldable rotors 220 is set to an even number. The plurality of foldable rotors 220 can be evenly distributed on the left and right sides of the aircraft body 210, meaning the number of foldable rotors 220 corresponding to the left and right sides of the aircraft body 210 is the same, so that the driving forces received by the left and right sides of the aircraft body 210 are also in a roughly identical state. In other embodiments, corresponding arrangements can be made according to the structural characteristics of the aircraft body 210. For example, if the aircraft 200 is a fuel-powered or range-extended aircraft, the number layout of the foldable rotors 220 on the left and right sides of the aircraft body 210 can be determined based on the specific position of the fuel storage equipment on the aircraft 200 and the impact of weight changes of the fuel storage equipment during flight on the center of gravity of the aircraft body 210.

The specific number of foldable rotors 220 needs to be specifically considered and arranged based on factors such as the weight of the aircraft body 210 and the output power of the foldable rotors 220 in actual situations. In traditional multi-rotor manned aircraft, if six rotors are configured, although it is relatively easy to arrange, if one of the six rotors malfunctions, a yaw (loss of control) problem will occur. Therefore, people choose to configure eight rotors or more to provide redundant power and overcome the yaw loss of control problem. However, the overall dimensions of the flying car 1000 must also be considered so that the flying car 1000 can adapt to public road settings and existing parking systems. For example, in this embodiment, when the vehicle 100 and the aircraft 200 are coupled, the overall structure length of the flying car 1000 does not exceed 5.9 meters, the height does not exceed 2 meters, and the width does not exceed 2.2 meters. Configuring eight rotors or more would make it difficult to meet the overall dimensional requirements of the flying car 1000, and would significantly increase the overall weight of the aircraft 200, reduce its lightweight degree, and shorten its endurance time and flight range.

Therefore, the present application chooses to configure six foldable rotors 220 as the power system of the aircraft 200. This meets the power requirements for the aircraft 200 to travel while achieving lightweight design, improving endurance, and ensuring that when the aircraft 200 is coupled to the vehicle 100, the overall dimensions of the flying car 1000 adapt to public roads and existing parking systems. When six foldable rotors 220 are configured, if one foldable rotor 220 malfunctions, it will cause overall yaw loss of control of the aircraft 200. Therefore, this embodiment of the present application configures two ducted fans 230 to overcome this safety issue, breaking through the difficulty that traditional six-rotor manned aircraft lack yaw control capability.

Referring to FIG. 10, the aircraft body 210 corresponds to 3 foldable rotors 220 on each of its left and right sides in the forward direction of the aircraft 200, so that the aircraft 200 is in a roughly balanced state in the left-right direction. Additionally, the aircraft body 210 is also in a roughly balanced state in the forward direction of the aircraft. Specifically, the aircraft body 210 in this embodiment includes a first body portion 2170, a second body portion 2180, and a third body portion 2190. The first body portion 2170, the second body portion 2180, and the third body portion 2190 are sequentially arranged side-by-side and connected along the forward direction of the aircraft 200. The six foldable rotors 220 are divided into three groups, with each group having two foldable rotors 220. The three groups of foldable rotors 220 correspond to the first body portion 2170, the second body portion 2180, and the third body portion 2190, respectively. The three groups of foldable rotors 220 respectively bear the weights of the first body portion 2170, the second body portion 2180, and the third body portion 2190, keeping the aircraft body 210 in a roughly balanced state in the forward direction of the aircraft 200.

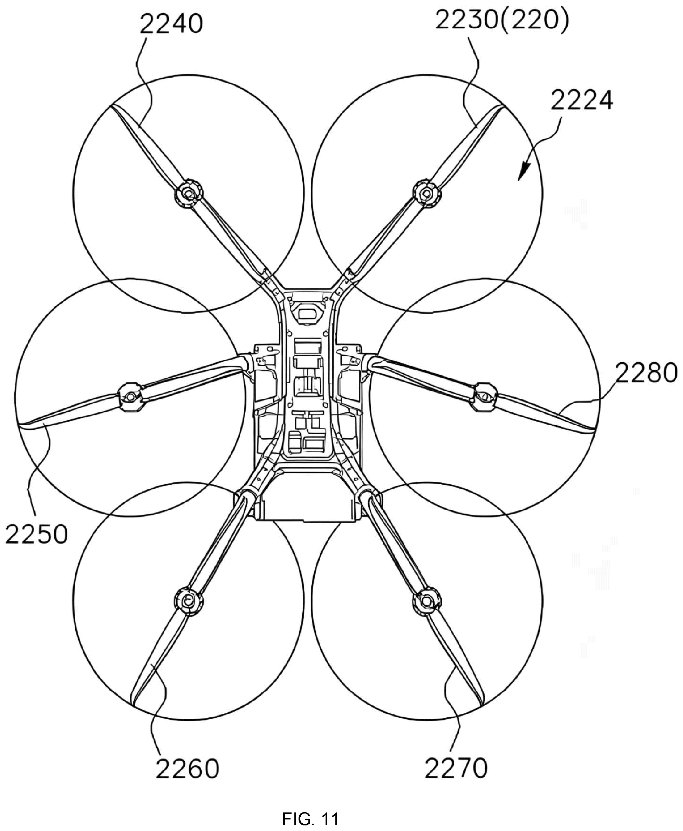

Referring to FIG. 11, in this embodiment, to reserve sufficient operating space for each foldable rotor 220, the plurality of foldable rotors 220 are sequentially spaced and arranged around the frame 2210. For ease of understanding, when the aircraft 200 is in a level flight state, projecting the aircraft 200 onto a horizontal plane, the projections of the plurality of foldable rotors 220 are distributed around the outer periphery of the projection of the aircraft body 210. This causes the plurality of foldable rotors 220 to diverge relative to the aircraft body 210, avoiding structural collisions between adjacent or nearby foldable rotors 220 during operation, and ensuring high safety of the aircraft 200 in the flight state. However, to prevent the positions of the plurality of foldable rotors 220 from being too dispersed, the degree of divergence of the plurality of foldable rotors 220 is limited in this embodiment. In this embodiment, each foldable rotor 220 forms a rotor swept area 2224 during rotation. When the aircraft 200 is in a level flight state and projected onto a horizontal plane, the projections of the rotor swept areas 2224 of at least two adjacent foldable rotors 220 partially overlap. This gives the plurality of foldable rotors 220 a certain degree of integrity and correlation, and improves the aerodynamic efficiency of the foldable rotors 220.

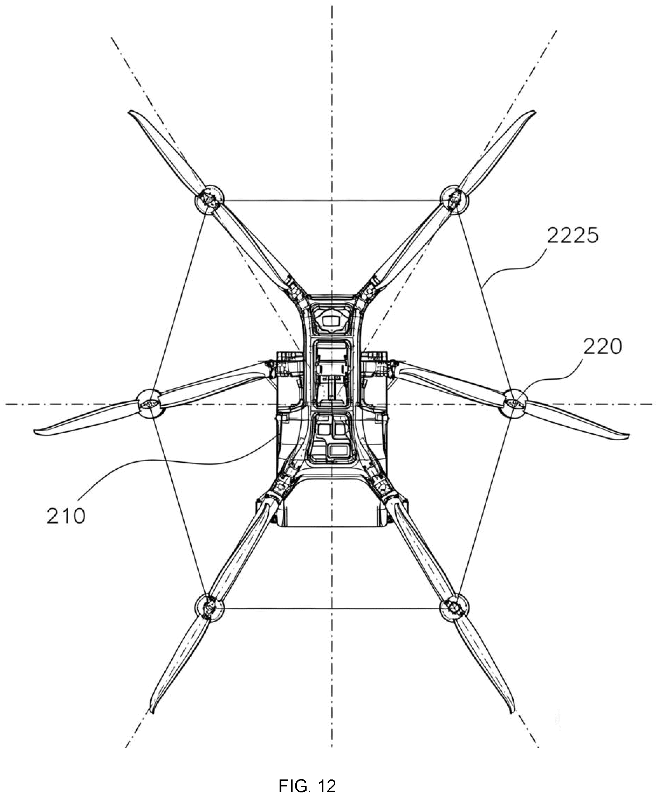

Referring to FIG. 12, in this embodiment, the plurality of foldable rotors 220 are arranged in a divergent manner. The lines connecting the center points of the plurality of foldable rotors 220 form a polygon 2225. The geometric center of the polygon 2225 and the center of gravity of the aircraft body 210 are located on the same vertical line, or the parallel distance between the vertical line where the geometric center of the polygon 2225 is located and the vertical line where the center of gravity of the aircraft body 210 is located is small, so that the aircraft 200 can remain in a balanced and stable state during flight. It should be understood that the above-mentioned polygon 2225 should be understood as being formed by connecting the center points of the plurality of foldable rotors 220 when projected onto a horizontal plane. Further, the plurality of foldable rotors 220 in this embodiment are arranged in central symmetry. This can be understood as the polygon 2225 formed by the plurality of foldable rotors 220 being roughly a centrally symmetrical figure, so that the driving force formed by any three connected foldable rotors 220 is roughly the same as the driving force formed by the other three connected foldable rotors 220, further improving the balance and safety of the aircraft 200 in the flight state.

In this embodiment, two foldable rotors 220 located on the same diagonal of the polygon 2225 constitute a pair of corresponding foldable rotors 220. The corresponding two foldable rotors 220 are arranged in central symmetry. When the output powers of the two foldable rotors 220 are the same, the two foldable rotors 220 form a balanced external force group relative to the aircraft body 210. Along the direction of the line connecting the two foldable rotors 220, the aircraft body 210 can maintain balance under the action of the two foldable rotors 220. Further, in this embodiment, the rotation directions of the two foldable rotors 220 arranged in pairs are set oppositely to generate a yaw moment.

In traditional multi-rotor manned aircraft, to keep multiple rotors in a dispersed state, fixed wings are extended on both sides of the multi-rotor manned aircraft along its flight direction, and the rotors are disposed on the fixed wings so that multiple rotors surround the multi-rotor manned aircraft. However, fixed wings cannot be folded, occupy a large amount of space, and prevent the multi-rotor manned aircraft from reducing its structure size. Consequently, it cannot drive on public roads and can only take off or land on helipads, severely limiting the application range of multi-rotor manned aircraft.

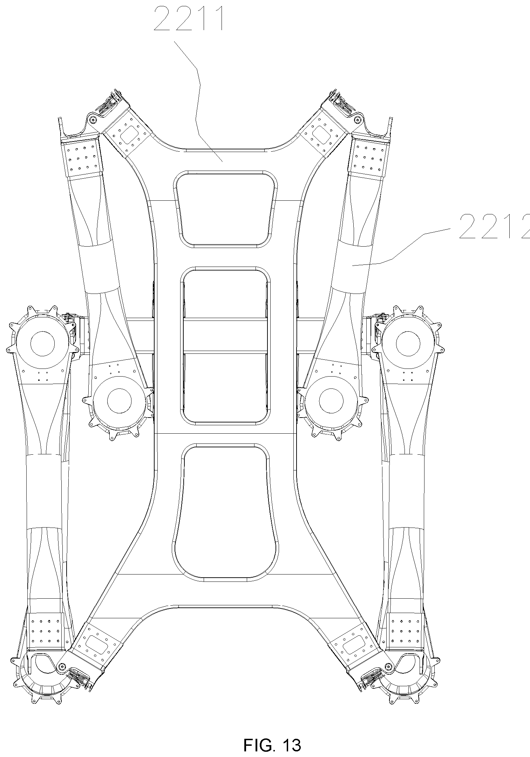

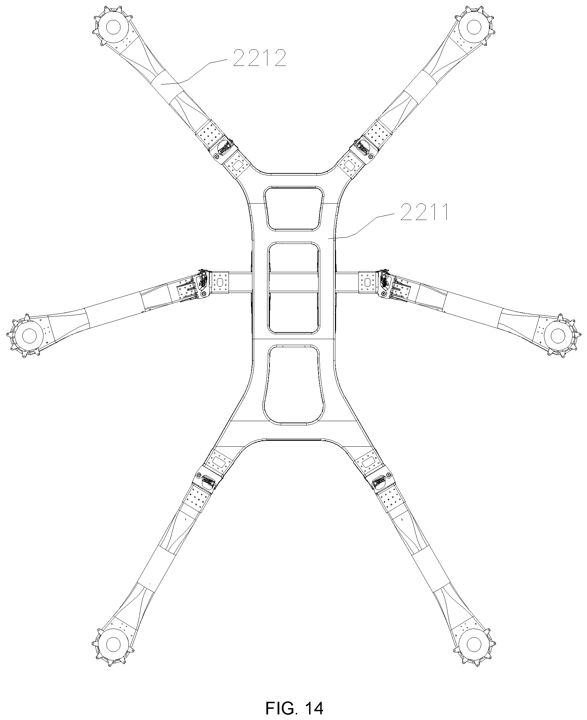

Referring to FIG. 13 and FIG. 14, to achieve the divergent arrangement of the plurality of foldable rotors 220 relative to the aircraft body 210, the frame 2210 in this embodiment is configured to include a support bracket 2211 and a plurality of arms 2212. The support bracket 2211 is provided on the top of the aircraft body 210, and the plurality of arms 2212 are disposed on the support bracket 2211. The arms 2212 are configured to install the foldable rotors 220. Therefore, the number of arms 2212 is consistent with the number of foldable rotors 220. For example, in this embodiment, the number of arms 2212 and the number of foldable rotors 220 are both six. The six foldable rotors 220 and the six arms 2212 are arranged in one-to-one correspondence, with each foldable rotor 220 installed on a corresponding arm 2212. The plurality of arms 2212 are sequentially spaced along the circumferential direction of the support bracket. The arms 2212 extend relative to the support bracket 2211 in a direction away from the center of the support bracket 2211, so that the plurality of foldable rotors 220 are connected to the aircraft body 210 in a divergent state. As described above, the support bracket 2211 in this embodiment can be understood as an independent frame structure disposed on the top of the aircraft body 210 and the flight cabin 2110. The support bracket 2211 may be connected to the top of the aircraft body 210 by welding to enhance the integrity between the aircraft body 210 and the support bracket 2211. The support bracket 2211 may also be fixedly connected to the aircraft body 210 through fixing components (e.g., threaded fasteners such as bolts, or adhesives such as structural glue) to facilitate replacement or maintenance of the support bracket 2211.

In other embodiments, the support bracket 2211 may serve as the overall frame structure of the aircraft body 210. The support bracket 2211 roughly constructs the external contour of the aircraft body 210. The support bracket 2211 is formed by (lapping/joining) multiple rod-shaped structures and/or column-shaped structures and is roughly a rectangular parallelepiped structure. The rectangular parallelepiped structure of the support bracket 2211 has an internal space, part or all of which serves as the flight cabin 2110. In this embodiment, the arms 2212 are disposed on the top of the support bracket 2211, i.e., on the top of the flight cabin 2110. The arms 2212 may be integrally formed with the support bracket 2211 to enhance the integrity between them. The arms 2212 may also be fixedly and detachably connected to the support bracket 2211 through connecting structures, which not only ensures the stability of the connection between the arms 2212 and the support bracket 2211 but also facilitates replacement or maintenance. If the arms 2212 and the support bracket 2211 are connected through connecting structures, the arms 2212 may be configured to be rotatably connected to the frame 2211. When the aircraft 200 is in a landed state, the arms 2212 can be folded and brought close to the support bracket 2211 to reduce the overall structural dimensions of the aircraft body 210.

When the aircraft 200 is in a landed state, or when the aircraft 200 is coupled to the vehicle 100, to enable the plurality of foldable rotors 220 to transition from a divergent state to a gathered state, the plurality of arms 2212 in this embodiment are rotatably connected to the support bracket 2211. When the foldable rotors 220 are in a divergent state, the plurality of arms 2212 are in an extended state. The arms 2212 can rotate relative to the support bracket 2211 in a direction toward the support bracket 2211 to be stacked on the outer periphery of the support bracket 2211, so that the plurality of arms 2212 transition to a folded state, and the plurality of foldable rotors 220 transition to a gathered state. This can reduce the external contour of the foldable rotors 220, enabling the dimensions of the aircraft 200 to adapt to the vehicle 100 and ensuring the dimensions of the flying car 1000 comply with regulations. Conversely, when the plurality of arms 2212 are in a folded state and the plurality of foldable rotors 220 are in a gathered state, the arms 2212 can rotate relative to the support bracket 2211 to return to the extended state, causing the plurality of foldable rotors 220 to return to the divergent state in preparation for flight.

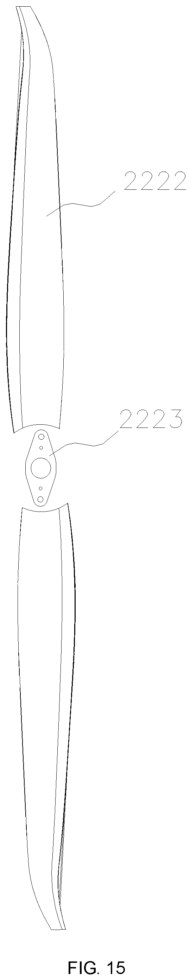

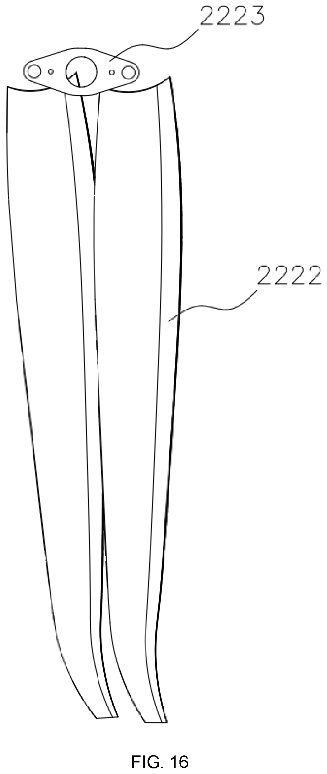

Referring to FIG. 15 and FIG. 16, to further reduce the external contour of the foldable rotors 220 when the aircraft 200 is in a landed state, in addition to the arms 2212 being foldable, the foldable rotors 220 in this embodiment can also be folded. Specifically, the foldable rotor 220 in this embodiment includes at least two blades 2222 and a hub 2223. The two blades 2222 are connected to opposite sides of the hub 2223. The two blades 2222 can move closer to each other to form a folded state. When in the folded state, the two blades 2222 are arranged along the length direction of the arm 2212, i.e., the blades 2222 are stacked on the arm 2212 to reduce the external contour of the aircraft 200. To simplify the structure of the foldable rotor 220, the foldable rotor 220 in this embodiment is selected as a single-axis single-blade rotor, and is a fixed-pitch rotor. That is, when the foldable rotor 220 is rotating, the blades 2222 do not deflect or move relative to the hub 2223.

Referring again to FIG. 10, for ease of description and differentiation of each foldable rotor 220, the six foldable rotors 220 in this embodiment are respectively defined as a first rotor 2230, a second rotor 2240, a third rotor 2250, a fourth rotor 2260, a fifth rotor 2270, and a sixth rotor 2280. The six foldable rotors 220 are arranged in a ring. In the counterclockwise direction of their ring arrangement, the six foldable rotors 220 are arranged in ascending order. That is, in the counterclockwise direction, the first rotor 2230, the second rotor 2240, the third rotor 2250, the fourth rotor 2260, the fifth rotor 2270, and the sixth rotor 2280 are sequentially spaced. When the aircraft 200 is projected onto a horizontal plane in the flight state, taking the forward direction of the aircraft 200 as a reference direction, the second rotor 2240, the third rotor 2250, and the fourth rotor 2260 are located on the left side of the aircraft body 210, and the first rotor 2230, the sixth rotor 2280, and the fifth rotor 2270 are located on the right side of the aircraft body 210. Specifically, the third rotor 2250 is located on the left side of the aircraft body 210, the second rotor 2240 is located on the front-left side of the aircraft body 210, and the fourth rotor 2260 is located on the rear-left side of the aircraft body 210. The sixth rotor 2280 is located on the right side of the aircraft body 210, the first rotor 2230 is located on the front-right side of the aircraft body 210, and the fifth rotor 2270 is located on the rear-right side of the aircraft body 210.

Referring to FIG. 10, it can be deduced from the foregoing that the first rotor 2230 and the second rotor 2240 correspond to the third body portion 2190, the third rotor 2250 and the sixth rotor 2280 correspond to the second body portion 2180 of the aircraft body 210, and the fourth rotor 2260 and the fifth rotor 2270 correspond to the first body portion 2170. Furthermore, the first rotor 2230 and the fourth rotor 2260 are located on the same diagonal of the polygon 2225 and form a pair, the second rotor 2240 and the fifth rotor 2270 are located on the same diagonal and form a pair, and the third rotor 2250 and the sixth rotor 2280 are located on the same diagonal and form a pair. Assuming the first rotor 2230, the third rotor 2250, and the fifth rotor 2270 are configured to rotate in a first direction (e.g., clockwise), the second rotor 2240, the fourth rotor 2260, and the sixth rotor 2280 are configured to rotate in a second direction (e.g., counterclockwise). The second direction is set opposite to the first direction.

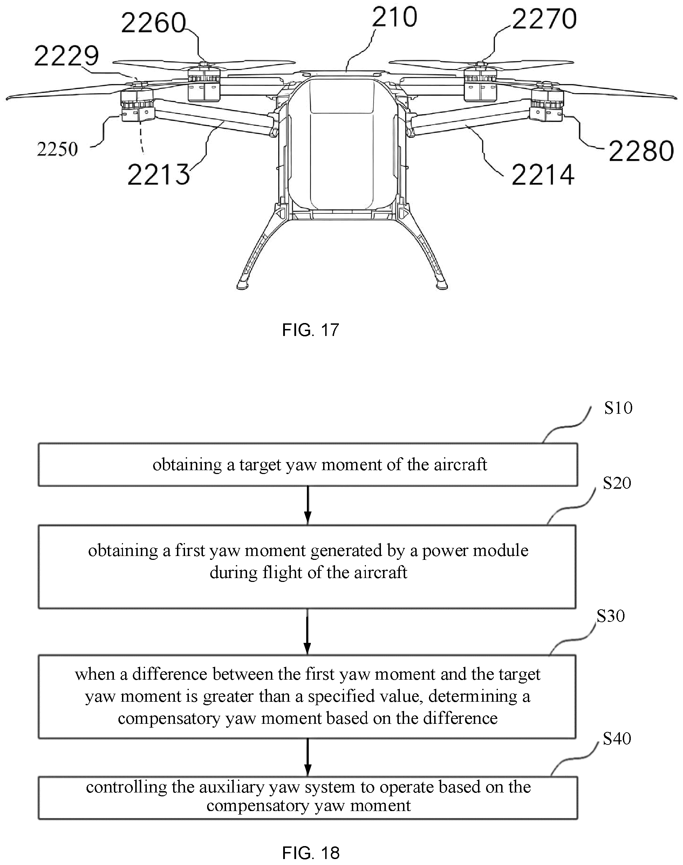

Referring to FIG. 17, as mentioned earlier, when the aircraft 200 is projected onto a horizontal plane in a level flight state, the projections of the rotor swept areas 2224 of at least two adjacent foldable rotors 220 partially overlap. This is to limit the degree of divergence of the foldable rotors 220. However, in actual spatial structure, it is necessary to avoid the rotor swept areas 2224 of two adjacent foldable rotors 220 from overlapping. The rotor swept areas 2224 of the plurality of foldable rotors 220 are located on at least two planes to avoid structural collisions between adjacent foldable rotors 220, ensuring the safety and sustainability of the foldable rotors. In this embodiment, the two foldable rotors 220 corresponding to the first body portion 2170 and the two foldable rotors 220 corresponding to the third body portion 2190 are disposed on the same horizontal plane, which is defined as a first horizontal plane. The two foldable rotors 220 corresponding to the second body portion 2180 are disposed on another horizontal plane, defined as a second horizontal plane. The height of the first horizontal plane is higher than the height of the second horizontal plane. That is, the third rotor 2250 and the sixth rotor 2280 are located on a side of the first rotor 2230, the second rotor 2240, the fourth rotor 2260, and the fifth rotor 2270 facing the ground. The heights of the third rotor 2250 and the sixth rotor 2280 are lower than the heights of the first rotor 2230, the second rotor 2240, the fourth rotor 2260, and the fifth rotor 2270 to avoid collisions between the third rotor 2250 and the second rotor 2240 and the fourth rotor 2260, and to avoid collisions between the sixth rotor 2280 and the first rotor 2230 and the fifth rotor 2270. To avoid collisions between the first rotor 2230 and the second rotor 2240 located on the same plane, and to avoid collisions between the fourth rotor 2260 and the fifth rotor 2270 located on the same plane, reasonable avoidance can be made based on the length of the arms 2212 and the length of the blades 2222. This embodiment will not elaborate further. In other embodiments, each foldable rotor 220 may be disposed on different planes, and this embodiment does not specifically limit this.

In this embodiment, the first rotor 2230, the second rotor 2240, the fourth rotor 2260, and the fifth rotor 2270 are spaced at the four corners of the aircraft body 210 in the forward direction of the aircraft 200. The structures and generated airflow of the first rotor 2230, the second rotor 2240, the fourth rotor 2260, and the fifth rotor 2270 do not interfere with each other. Therefore, the rotation axes of the first rotor 2230, the second rotor 2240, the fourth rotor 2260, and the fifth rotor 2270 in this embodiment are arranged along the vertical direction. That is, the blades 2222 of the first rotor 2230, the second rotor 2240, the fourth rotor 2260, and the fifth rotor 2270 are roughly horizontally arranged, forming roughly horizontal rotor swept areas 2224 to provide vertical driving force to the aircraft body 210.

Referring to FIG. 11, when the aircraft 200 is projected onto a horizontal plane, there are projection overlap portions between the third rotor 2250 and the second rotor 2240 and the fourth rotor 2260. To avoid significant overlap between the airflow generated by the third rotor 2250 and the airflow generated by the second rotor 2240 and the fourth rotor 2260 in actual spatial structure, the third rotor 2250 in this embodiment is inclined (as shown in FIG. 17), so that both the rotation axis and the rotor swept area 2224 of the third rotor 2250 are inclined. The inclined arrangement of the rotor swept area 2224 of the third rotor 2250 can reduce mutual airflow interference between the third rotor 2250 and the second rotor 2240 and the fourth rotor 2260, improving the aerodynamic efficiency of the foldable rotors 220.

Specifically, when the two blades 2222 of the third rotor 2250 are in an extended state, they are basically on the same straight line. When the two blades 2222 rotate to the same vertical plane, the height of the blade 2222 closer to the aircraft body 210 is higher than the height of the blade 2222 farther from the aircraft body 210. This causes the rotor tip 2229 of the third rotor 2250 facing the sky to incline outward relative to the aircraft body 210, and the rotor swept area 2224 of the third rotor 2250 also inclines outward relative to the aircraft body 210. The outward inclination causes the radial direction of the third rotor 2250 to deviate relative to the flight cabin 2110. The radial direction of the third rotor 2250 is not vertically facing the flight cabin 2110, which can reduce damage to the flight cabin 2110 and its occupants in the event of an accidental explosion.

To further protect the structure of each foldable rotor 220, in this embodiment, the rotor swept area 2224 of the third rotor 2250 is lower than the rotor swept areas 2224 of the second rotor 2240 and the fourth rotor 2260. In this embodiment, the angle range between the rotation axis of the third rotor 2250 and the vertical direction is greater than or equal to 5°. Combined with the foregoing, it can be determined that the angle range between the rotation axis of the third rotor 2250 and the vertical direction in this embodiment is [5°, 10°]. In other embodiments, the angle range between the rotation axis of the third rotor 2250 and the vertical direction can be adaptively adjusted according to actual conditions.

Referring to FIG. 17, the positional relationship among the sixth rotor 2280, the first rotor 2230, and the fifth rotor 2270 in this embodiment can be set with reference to the positional relationship among the third rotor 2250, the second rotor 2240, and the fourth rotor 2260 described above. In this embodiment, the sixth rotor 2280, the first rotor 2230, and the fifth rotor 2270 are roughly mirror-symmetric to the third rotor 2250, the second rotor 2240, and the fourth rotor 2260 with respect to the axial plane of the aircraft body 210.

When the aircraft 200 is projected onto a horizontal plane, there are projection overlap portions between the sixth rotor 2280 and the first rotor 2230 and the fifth rotor 2270. To avoid significant overlap between the airflow generated by the sixth rotor 2280 and the airflow generated by the first rotor 2230 and the fifth rotor 2270 in actual spatial structure, the sixth rotor 2280 in this embodiment is inclined (as shown in FIG. 17), so that both the rotation axis and the rotor swept area of the sixth rotor 2280 are inclined. The inclined arrangement of the rotor swept area 2224 of the sixth rotor 2280 can reduce mutual airflow interference between the sixth rotor 2280 and the first rotor 2230 and the fifth rotor 2270, improving the aerodynamic efficiency of the foldable rotors 220.

Specifically, when the two blades 2222 of the sixth rotor 2280 are in an extended state, they are basically on the same straight line. When the two blades 2222 rotate to the same vertical plane, the height of the blade 2222 closer to the aircraft body 210 is higher than the height of the blade 2222 farther from the aircraft body 210. This causes the rotor tip of the sixth rotor 2280 facing the sky to incline outward relative to the aircraft body 210, and the rotor swept area 2224 of the sixth rotor 2280 also inclines outward relative to the aircraft body 210. The outward inclination causes the radial direction of the motor of the sixth rotor 2280 to deviate relative to the flight cabin 2110. The radial direction of the motor of the sixth rotor 2280 is not vertically facing the flight cabin 2110, which can reduce damage to the flight cabin 2110 and its occupants in the event of an accidental explosion of the motor.

To further protect the structure of each foldable rotor 220, in this embodiment, the rotor swept area 2224 of the sixth rotor 2280 is lower than the rotor swept areas 2224 of the first rotor 2230 and the fifth rotor 2270. In this embodiment, the angle range between the rotation axis of the sixth rotor 2280 and the vertical direction is greater than or equal to 5°. Combined with the foregoing, it can be determined that the angle range between the rotation axis of the sixth rotor 2280 and the vertical direction in this embodiment is [5°, 10°]. In other embodiments, the angle range between the rotation axis of the sixth rotor 2280 and the vertical direction can be adaptively adjusted according to actual conditions.

Among the six arms 2212 in this embodiment, four arms 2212 are disposed in one-to-one correspondence with the first rotor 2230, the second rotor 2240, the fourth rotor 2260, and the fifth rotor 2270. The remaining two arms 2212 are disposed in one-to-one correspondence with the third rotor 2250 and the sixth rotor 2280. For ease of differentiation, the arm 2212 corresponding to the third rotor 2250 is defined as a first arm 2213, and the arm 2212 corresponding to the sixth rotor 2280 is defined as a second arm 2214. The first arm 2213 and the second arm 2214 are respectively disposed on the two sides of the aircraft body 210 in the forward direction of the aircraft 200.

Referring to FIG. 6, to achieve the staggered height arrangement of the six foldable rotors 220, when the six arms 2212 in this embodiment are all in a folded state, the four arms 2212 other than the first arm 2213 and the second arm 2214 are stacked side-by-side on the same plane, which is roughly a horizontal plane. The first arm 2213 and the second arm 2214 are stacked on a side of the aforementioned four arms 2212 facing the ground. This satisfies the positional state of the third rotor 2250 and the sixth rotor 2280 relative to the first rotor 2230, the second rotor 2240, the fourth rotor 2260, and the fifth rotor 2270, and can improve the space utilization rate of the six arms 2212 and the six foldable rotors 220.

Referring to FIG. 4, the auxiliary yaw system of the aircraft 200 in this embodiment includes two ducted fans 230. The two ducted fans 230 are provided on the aircraft body 210. The ducted fans 230 can provide auxiliary yaw moment to compensate for the yaw moment deviation caused by a failed foldable rotor 220 when the yaw moment generated by the six foldable rotors 220 is insufficient or when one of the six foldable rotors 220 fails. The structure of the ducted fans 230 in this embodiment remains stable relative to the aircraft body 210, which can simplify the installation structure of the ducted fans 230. The fixed position of the ducted fans 230 is specifically manifested as follows: each ducted fan 230 has a rotation axis. In the flight state, the rotation axis of the ducted fan 230 remains fixed relative to the aircraft body 210. In other embodiments, the ducted fans 230 may be movably disposed on the aircraft body 210 to increase their flexibility and improve the performance of the auxiliary yaw system. This embodiment uses the ducted fans 230 as the auxiliary yaw system. The ducted fans 230 can generate a large yaw moment, experience less resistance when the aircraft 200 is in flight, and have high overall working efficiency.

Additionally, in the level flight state of the aircraft 200, the angle range between the rotation axis of the ducted fan 230 in this embodiment and a horizontal plane is roughly less than or equal to 5°. In other embodiments, the angle range between the rotation axis of the ducted fan 230 and the horizontal plane can be adaptively adjusted according to actual conditions.

Referring to FIG. 4, for ease of describing the specific position of each ducted fan 230 on the aircraft body 210 and its relative positional relationship with other structures, the two ducted fans 230 in this embodiment are defined as a first ducted fan 2311 and a second ducted fan 2312. Specifically, the first ducted fan 2311 is correspondingly disposed with the third rotor 2250 and is provided on the first arm 2213. The second ducted fan 2312 is correspondingly disposed with the sixth rotor 2280 and is provided on the second arm 2214. The first arm 2213 and the second arm 2214 are respectively located on the left and right sides of the aircraft body 210 in the forward direction of the aircraft 200. When the aircraft body 210 yaws, the first ducted fan 2311 and the second ducted fan 2312 disposed on the first arm 2213 and the second arm 2214 have a larger yaw moment. With the rated power of the first ducted fan 2311 and the second ducted fan 2312 unchanged, the compensation adjustment range formed by disposing the first ducted fan 2311 and the second ducted fan 2312 on the first arm 2213 and the second arm 2214 is larger than the compensation adjustment range formed by disposing them on the other four arms 2212.

In this embodiment, both the first ducted fan 2311 and the third rotor 2250 are disposed on the first arm 2213. The first ducted fan 2311 and the third rotor 2250 may be located at the distal end of the first arm 2213 away from the aircraft body 210. This position has a longer distance relative to the center of gravity of the aircraft body 210, resulting in a relatively longer transverse lever arm, which can generate a relatively larger yaw moment and enable higher power efficiency of the first ducted fan 2311.

Specifically, the first arm 2213 has a top side and a bottom side opposite to each other. The top side of the first arm 2213 faces the sky, and the bottom side of the first arm 2213 faces the ground. The third rotor 2250 is provided on the top side of the first arm 2213, and the first ducted fan 2311 is provided on the bottom side of the first arm 2213, so that the third rotor 2250 and the first ducted fan 2311 are spaced apart to avoid structural collisions. Further, to reduce the impact of airflow from the tip of the blade 2222 of the third rotor 2250 on the first ducted fan 2311, in this embodiment, the first ducted fan 2311 is provided avoiding the blade 2222 of the third rotor 2250. Specifically, the first ducted fan 2311 in this embodiment has a rotation center (i.e., rotation axis). When the hub 2223 of the third rotor 2250 is rotating, it forms a first maximum rotation plane. When the aircraft 200 is projected onto a horizontal plane, the projection of the first maximum rotation plane covers the rotation center of the first ducted fan 2311. This causes the rotation center of the first ducted fan 2311 and its nearby structures to correspond to the hub 2223 of the third rotor 2250. From a macroscopic structural perspective, the rotation center (i.e., rotation axis) of the first ducted fan 2311 is located directly below the hub 2223 of the third rotor 2250. Therefore, the airflow volume at the hub 2223 of the third rotor 2250 is relatively small and weak, resulting in minimal impact on the first ducted fan 2311.

Similarly, the second ducted fan 2312 in this embodiment has a rotation center (i.e., rotation axis). When the hub 2223 of the sixth rotor 2280 is rotating, it forms a second maximum rotation plane. When the aircraft 200 is projected onto a horizontal plane, the projection of the second maximum rotation plane covers the rotation center of the second ducted fan 2312. This causes the rotation center of the second ducted fan 2312 and its nearby structures to correspond to the hub 2223 of the sixth rotor 2280. From a macroscopic structural perspective, the rotation center (i.e., rotation axis) of the second ducted fan 2312 is located directly below the hub 2223 of the sixth rotor 2280. Therefore, the airflow volume below the hub 2223 of the sixth rotor 2280 is relatively small and weak, resulting in minimal impact on the second ducted fan 2312.

To monitor the working state of each foldable rotor 220 and control the working nodes of the ducted fans 230 based on the working state of each foldable rotor 220, the aircraft 200 in this embodiment further includes a yaw control system (not labeled in the drawings). The yaw control system is electrically connected to the foldable rotors 220 and the ducted fans 230, respectively, to enable information exchange and command execution. The control mechanism of the yaw control system for the failure of one foldable rotor 220 is as follows: when any one of the plurality of foldable rotors 220 fails, the yaw control system controls the two ducted fans 230 to operate to provide a compensatory yaw moment to the aircraft 200. The magnitude of the compensatory yaw moment is roughly equal to the difference between the actual yaw moment jointly formed by the remaining five foldable rotors 220 and the target yaw moment. The yaw control system enables the aircraft 200 to handle foldable rotor 220 failure, ensuring the safety of the pilot and the aircraft 200.

Additionally, the control mechanism of the yaw control system for insufficient yaw moment when the six foldable rotors 220 are working normally is as follows: the yaw control system controls the two ducted fans 230 to operate to provide a compensatory yaw moment to the aircraft 200. The magnitude of the compensatory yaw moment is roughly equal to the difference between the actual yaw moment jointly formed by the six foldable rotors 220 and the target yaw moment.

As known from the foregoing, the first rotor 2230 and the fourth rotor 2260 form a pair, the second rotor 2240 and the fifth rotor 2270 form a pair, and the third rotor 2250 and the sixth rotor 2280 form a pair. Each pair of foldable rotors 220 can keep the aircraft body 210 balanced along the corresponding diagonal. To simplify the control of the six foldable rotors 220 by the yaw control system, the yaw control system in this embodiment is further configured as follows: when any foldable rotor 220 fails, it controls the foldable rotor 220 corresponding to the failed foldable rotor 220 to stop working, and controls the two ducted fans 230 to operate to provide a compensatory yaw moment to the aircraft body 210. The advantage of this configuration is that, assuming the first rotor 2230 fails, the yaw control system controls the fourth rotor 2260 to stop working, and controls the two ducted fans 230 to work to compensate for the yaw moment deviation caused by the failure of the first rotor 2230 and the fourth rotor 2260. In this process, the yaw control system only needs to make the two ducted fans 230 make up the yaw moment required for the aircraft body 210 to yaw, which can omit or reduce the need to account for the fourth rotor 2260, such as differences in position, output power, and resistance between the fourth rotor 2260 and the two ducted fans 230. This can simplify the calculation steps of the yaw control system, improve working efficiency, and enable the aircraft 200 to resume normal flight in a shorter time during flight.

Furthermore, assuming the first rotor 2230 fails, the yaw control system controls the fourth rotor 2260 to stop working. The second rotor 2240 and the fifth rotor 2270, as well as the third rotor 2250 and the sixth rotor 2280, can still maintain the balance of the aircraft body 210. The yaw control system only needs to control the four normally working foldable rotors 220 to increase their output power to compensate for the vertical traction force and reach the target traction force. There is no need to comprehensively consider the balance adjustment among the second rotor 2240, the third rotor 2250, the fourth rotor 2260, the fifth rotor 2270, and the sixth rotor 2280.

In summary, this embodiment of the present application provides a fully electric aircraft 200. The aircraft 200 includes an aircraft body 210, a frame 2210, and a plurality of non-tilting foldable rotors 220. The aircraft body 210 is provided with a flight cabin 2110 for carrying crew and passengers. The aircraft 200 uses a plurality of foldable rotors as a power system. The frame 2210 is located on the top of the aircraft body 210. The plurality of foldable rotors 220 are connected to the frame 2210 and are spaced apart around a vertical line where the center of gravity of the aircraft 200 is located. When the aircraft body 210 is in flight, the rotation axis of the foldable rotor 220 remains fixed relative to the aircraft body 210. To address situations where the yaw moment formed by the plurality of non-tilting foldable rotors 220 is imbalanced, such as yaw moment imbalance or failure of at least one foldable rotor 220, the aircraft 200 is further provided with two ducted fans 230. The two ducted fans 230 are connected to the frame 2210 and are respectively located on the left and right sides of the aircraft body 210. When the yaw moment provided by the foldable rotors 220 is imbalanced, they provide a compensatory yaw moment to the aircraft body 210. Compared to traditional multi-rotor manned aircraft, the aircraft 200 in this embodiment does not use fixed wings to disperse the plurality of foldable rotors 220. Instead, it uses a partially foldable frame 2210 to install the plurality of foldable rotors, enabling the overall structure of the aircraft 200 to contract or expand. When the aircraft 200 is coupled to the vehicle 100, the dimensions of the flying car 1000 can adapt to roads. Furthermore, the aircraft 200 is provided with two ducted fans 230 on its left and right sides in the forward direction. When the yaw moment formed by the plurality of non-tilting foldable rotors 220 is imbalanced, the ducted fans can operate and provide a compensatory yaw moment to the aircraft body 210. This enables the aircraft body 210, when configured with six foldable rotors 220, to overcome the problem of being unable to yaw due to yaw moment imbalance.

Referring to FIG. 18, based on the aforementioned aircraft and the yaw control system of the aircraft, this embodiment of the present application further provides a flight control method for an aircraft. The flight control method includes the following steps:

S10: obtaining a target yaw moment of the aircraft.

The target yaw moment refers to the yaw moment required for the aircraft body to yaw by a certain angle (e.g., a target yaw angle, which can be set according to actual needs). The yaw control system obtains the target yaw moment required for the aircraft to achieve yaw based on the target yaw moment and parameters of the aircraft. Specifically, the parameters of the aircraft include the weight of the aircraft, the resistance experienced by the aircraft, the atmospheric pressure of the air layer where the aircraft is located, and the air velocity, etc.

In some embodiments, the step S10: obtaining the target yaw moment of the aircraft includes: obtaining a current yaw angle and a target yaw angle of the aircraft; and determining the target yaw moment of the aircraft based on the current yaw angle and the target yaw angle.

S20: obtaining a first yaw moment generated by the foldable rotors during flight of the aircraft.

The yaw control system obtains the actual output power of the plurality of foldable rotors, calculates the first yaw moment generated by the plurality of foldable rotors based on their actual output power, and compares the first yaw moment with the target yaw moment to determine whether the first yaw moment can satisfy the aircraft yawing to the target yaw angle.

S30: when a difference between the first yaw moment and the target yaw moment is greater than a specified value, determining a compensatory yaw moment based on the difference. When the yaw control system determines that the difference between the first yaw moment and the target yaw moment is greater than a specified value, it indicates that the aircraft body cannot smoothly achieve the target yaw angle under the first yaw moment. The specified value in this embodiment refers to the difference between the upper and lower limits of a yaw moment range interval that enables the aircraft body to achieve the target yaw angle. The target yaw moment is located within this range interval. In some examples, the specified value refers to the difference between the minimum yaw moment that enables the aircraft body to achieve the target yaw angle and the target yaw moment. In other embodiments, the specified value may also be a numerical range. The minimum value within the range indicates that when the difference between the target yaw moment and the first yaw moment is the minimum value, the first yaw moment can fully support the aircraft yawing to the target yaw angle. The maximum value within the range indicates that when the difference between the target yaw moment and the first yaw moment is the maximum value, the first yaw moment can basically support the aircraft yawing to the target yaw angle.

Subsequently, the yaw control system calculates the compensatory yaw moment that the auxiliary yaw system needs to provide based on the first yaw moment, the target yaw moment, and the specified value.

S40: controlling the auxiliary yaw system to operate based on the compensatory yaw moment. The difference between a sum of a second yaw moment generated by the operation of the auxiliary yaw system and the first yaw moment, and the target yaw moment is less than or equal to the specified value.

The yaw control system controls the auxiliary yaw system to operate. The ducted fans in the auxiliary yaw system work and generate a second yaw moment. The difference between the sum of the second yaw moment and the first yaw moment, and the target yaw moment must be less than or equal to the specified value, so that the aircraft can achieve the target yaw angle under the joint driving action of the foldable rotors and the auxiliary yaw system.

In some embodiments, controlling the auxiliary yaw system to operate based on the compensatory yaw moment includes: determining a target power of the ducted fans based on the compensatory yaw moment; determining a target rotation speed of the ducted fans based on the target power and the dimensions and aerodynamic efficiency of the ducted fans; and controlling the ducted fans to operate based on the target rotation speed to cause the ducted fans to generate the second yaw moment.

Therefore, in this embodiment, by introducing an auxiliary yaw system, the auxiliary yaw system can operate and provide a compensatory yaw moment to the aircraft body when the yaw moment formed by the foldable rotors is imbalanced, enabling the aircraft body to overcome the problem of being unable to yaw due to yaw moment imbalance. Specifically, the power of the auxiliary yaw system can change in real time according to flight attitude and flight power parameters. When a foldable rotor failure is detected, the auxiliary yaw system starts working. When the entire aircraft experiences active or passive yaw deviation, the aircraft controller or flight control system can control the entire aircraft yaw (e.g., heading hold or primary nose turn) according to predetermined control principles. If the aircraft controller or flight control system finds that control capability is insufficient, it uses the auxiliary yaw system for supplementary control to meet the entire aircraft yaw control requirements.

In some embodiments, the step S20 obtaining the first yaw moment generated by the foldable rotors during flight of the aircraft in the aforementioned method includes the following steps S21 to S22.

S21: during flight of the aircraft, obtaining working parameters of each foldable rotor and fault index parameters of the foldable rotors. The fault index parameters are monitored by a fault self-diagnosis system of the aircraft, and the fault index parameters characterize the degree of fault occurrence in the foldable rotors.

Specifically, the aircraft controller or yaw control system can obtain the working parameters of each foldable rotor. The working parameters of the foldable rotors may include the output power of the foldable rotors, the resistance experienced by the foldable rotors, etc. The aircraft further includes a fault self-diagnosis system electrically connected to the yaw control system. The fault self-diagnosis system is configured to detect the degree of fault occurrence in the foldable rotors (e.g., the degree of damage or severity of the fault), record the degree of fault occurrence as fault index parameters, and transmit the fault index parameters of the foldable rotors to the yaw control system. Taking a rotor assembly as an example of a foldable rotor, as one example, the fault detection system may include a fault detection circuit connected to a motor drive circuit, which is configured to determine whether the rotor motor is operating normally based on electrical signal conditions of the motor drive circuit (e.g., at least one of output power, current magnitude, voltage magnitude), thereby deriving the fault degree of the rotor motor. As another example, the fault detection system may further include a rotation speed sensor connected to the rotor shaft, which is configured to detect the rotational state of the rotor (e.g., at least one of rotation direction, rotation speed, rotational acceleration) and determine whether the rotor is operating normally based on this rotational state, thereby deriving the fault degree of the rotor. In some examples, the information carried by the fault index parameters may include specific faulty components and the specific degree of damage of the fault.

For example, the fault index parameters may be represented by codes, such as fault code EA2, where one part of the code (e.g., EA) characterizes the specific fault location (e.g., motor or rotor), and another part characterizes the severity of the fault (e.g., level 1 fault or level 2 fault). Therefore, the aircraft controller can determine the specific fault location and fault severity by reading the fault index parameters.

S22: obtaining the first yaw moment generated by the foldable rotors based on the working parameters and fault index parameters when it is determined that at least one of the plurality of foldable rotors has a fault.

Specifically, since the information carried by the fault index parameters may include specific faulty components and the specific degree of damage, the aircraft controller or yaw control system can determine the number of faulty foldable rotors among the plurality of foldable rotors based on the fault index parameters. When at least one of the plurality of foldable rotors has a fault, the aircraft controller or yaw control system can obtain the first yaw moment generated by the foldable rotors based on their working parameters. In fact, in some examples, when the foldable rotors are not faulty, it is not necessary to specifically obtain the first yaw moment generated by the foldable rotors. It is only when a fault is determined to have occurred in the foldable rotors based on the fault index parameters, indicating that the generated yaw moment may deviate from the target yaw moment, that it becomes necessary to obtain the first yaw moment generated by the foldable rotors. Therefore, in this embodiment, the system resources consumed by control and calculation are relatively small, which is conducive to the smooth operation of the aircraft controller.

In some embodiments, when a single foldable rotor among the plurality of foldable rotors has a fault, the step S22 obtaining the first yaw moment generated by the foldable rotors based on the working parameters and fault index parameters when it is determined that at least one of the plurality of foldable rotors has a fault includes the following steps S221 to S222.

S221: controlling the foldable rotor corresponding to the faulty foldable rotor to stop working based on the working parameters and fault index parameters when it is determined that one foldable rotor among the plurality of foldable rotors has a fault.

The yaw control system, in conjunction with the distribution of the power system described earlier, controls the foldable rotor corresponding to the faulty foldable rotor to stop working when one foldable rotor among the plurality of foldable rotors fails, to maintain the balance of the aircraft body in the horizontal direction. Since in this embodiment, the plurality of foldable rotors are arranged symmetrically about the longitudinal axis and are arranged in pairs, once one foldable rotor fails, the control process of stopping the corresponding foldable rotor enables the lift and thrust provided by the remaining foldable rotors to basically remain balanced. The working parameters are also easier to control, and the computational burden on the aircraft control system is relatively small.

S222: obtaining the first yaw moment jointly generated by the other foldable rotors excluding the faulty foldable rotor and its corresponding foldable rotor.

Taking six foldable rotors as an example, when two foldable rotors among the plurality of foldable rotors stop working, the yaw control system recalculates the first yaw moment generated by the remaining four foldable rotors and controls the auxiliary yaw system to operate to provide a compensatory yaw moment.

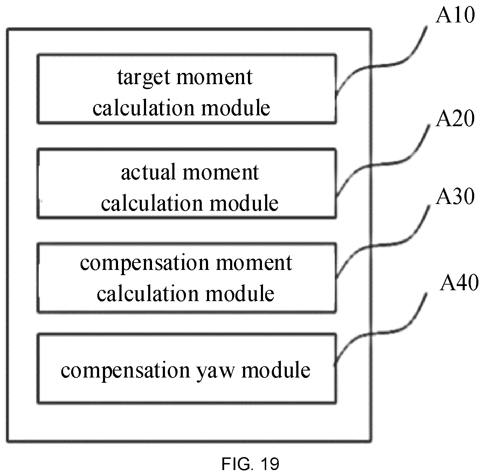

Referring to FIG. 19, FIG. 19 is a schematic functional block diagram of a flight control apparatus disclosed in an embodiment of the present application. Based on the aforementioned aircraft and its flight control method, this embodiment of the present application further provides a flight control apparatus. The flight control apparatus may include a target moment calculation module A10, an actual moment calculation module A20, a compensation moment calculation module A30, and a compensation yaw module A40.

The target moment calculation module A10 is configured to obtain a target yaw moment of the aircraft. The actual moment calculation module A20 is configured to obtain a first yaw moment generated by the foldable rotors during flight of the aircraft. The compensation moment calculation module A30 is configured to determine a compensatory yaw moment based on the difference when the difference between the first yaw moment and the target yaw moment is greater than a specified value. The compensation yaw module A40 is configured to control the auxiliary yaw system to operate based on the compensatory yaw moment. The difference between a sum of a second yaw moment generated by the operation of the auxiliary yaw system and the first yaw moment, and the target yaw moment is less than or equal to the specified value. For the specific working processes of the aforementioned functional units/modules, reference may be made to the corresponding processes in the aforementioned method embodiments, which will not be repeated here.

In the embodiments provided in the present application, the coupling between units/modules may be electrical, mechanical, or in other forms. Additionally, each functional unit/module in the various embodiments of the present application may be integrated into a single processing unit, each unit may exist physically separately, or two or more units may be integrated into a single unit. The aforementioned integrated units may be implemented in hardware form or in the form of software functional units.

Based on the aforementioned flying car and flight control method, this embodiment of the present application may further provide an aircraft. The aircraft may include a processor and a memory. The memory may store one or more computer programs. The one or more computer programs are configured to execute the methods described in the aforementioned method embodiments. The memory may exist independently or may be integrated with the processor. The processor may include one or more processing cores. The processor may utilize various interfaces and lines to connect various parts within the entire land vehicle, and may execute various functions and process data of the land vehicle by running or executing instructions, programs, code sets, or instruction sets stored in the memory, and by calling data stored in the memory. In one embodiment, the processor may be implemented in at least one hardware form of digital signal processing (DSP), field programmable gate array (FPGA), or programmable logic array (PLA). The processor may integrate one or a combination of several of a central processing unit (CPU), a graphics processing unit (GPU), and a modem. The CPU mainly processes the operating system, user interface, and application programs, etc.; the GPU is responsible for rendering and drawing display content; the modem is configured to process wireless communications. It can be understood that the aforementioned modem may also not be integrated into the processor, but implemented separately through a communication chip. The memory may include random access memory (RAM) or read-only memory (ROM). The memory may be configured to store instructions, programs, codes, code sets, or instruction sets. The memory may include a program storage area and a data storage area. The program storage area may store instructions for implementing the operating system, instructions for implementing at least one function (e.g., touch function, sound playback function, image playback function, etc.), instructions for implementing the various method embodiments described above, etc. The data storage area may also store data created during the use of the land vehicle (e.g., phone book, audio/video data, chat record data, etc.). When the computer program instructions stored in the memory are executed, the processor may be configured to execute various operations performed by the land vehicle in the aforementioned method embodiments. For specific implementations of these operations, reference may be made to the previous embodiments, which will not be repeated here.

This embodiment of the present application further provides a computer-readable storage medium. The computer-readable medium stores computer program code that can be called by a processor to execute various operations in the aforementioned method embodiments. For specific implementations of the aforementioned operations, reference may be made to the previous embodiments, which will not be repeated here. The computer-readable storage medium may be an electronic memory such as flash memory, electrically erasable programmable read-only memory (EEPROM), erasable programmable read-only memory (EPROM), hard disk, or ROM. In one embodiment, the computer-readable storage medium may comprise a non-transitory computer-readable storage medium. The computer-readable storage medium has a storage space for program code that executes any method steps in the aforementioned methods. These computer program codes can be read from or written into one or more computer program products. The computer program codes may be compressed in an appropriate form, for example.

In the specification of the present application, certain terms are configured to refer to specific components as used in the specification and claims. Those skilled in the art should understand that hardware manufacturers may use different nouns to refer to the same component. The specification and claims do not use differences in names as a means to distinguish components, but rather use differences in component functions as the criterion for distinction. As used throughout the specification and claims, "comprising" is an open-ended term and should be interpreted as "including but not limited to"; "roughly" means that those skilled in the art can solve technical problems within a certain error range and basically achieve the technical effect. In the description of the present application, it should be understood that terms such as "upper", "lower", "front", "rear", "left", "right", "inside", etc., indicating orientations or positional relationships are based on the orientations or positional relationships shown in the drawings. They are merely for the convenience of describing the present application and simplifying the description, and do not indicate or imply that the referred device or element must have a specific orientation, be constructed and operated in a specific orientation, and therefore cannot be construed as limiting the present application. In the present application, unless otherwise clearly specified or limited, terms such as "installed", "connected", "coupled", "fixed", etc., should be understood in a broad sense. For example, it may be a fixed connection, a detachable connection, or an integral connection; it may be a mechanical connection or an electrical connection; it may be a direct connection or an indirect connection through an intermediate medium; it may be internal communication between two elements or merely surface contact. For those of ordinary skill in the art, the specific meanings of the above terms in the present application can be understood according to specific circumstances. In the description of this specification, descriptions referring to terms such as "one embodiment", "some embodiments", "example", "specific example", or "some examples" mean that specific features, structures, materials, or characteristics described in conjunction with the embodiment or example are included in at least one embodiment or example of the present application. In this specification, schematic representations of the above terms do not necessarily refer to the same embodiment or example. Moreover, the described specific features, structures, materials, or characteristics may be combined in any one or more embodiments or examples in a suitable manner. Additionally, those skilled in the art may combine and integrate different embodiments or examples described in this specification, as well as features of different embodiments or examples, without contradiction. Furthermore, the terms "first", "second" are used for descriptive purposes only and cannot be understood as indicating or implying relative importance or implicitly indicating the number of indicated technical features. Thus, features defined with "first", "second" may explicitly or implicitly include at least one of such features. In the description of the present application, "plurality" means at least two, such as two, three, etc., unless otherwise clearly and specifically defined. Finally, it should be noted that the above embodiments are only configured to illustrate the technical solutions of the present application and not to limit them. Although the present application has been described in detail with reference to the foregoing embodiments, those of ordinary skill in the art should understand that they can still modify the technical solutions described in the foregoing embodiments or equivalently replace some of the technical features thereof. These modifications or replacements do not cause the essence of the corresponding technical solutions to depart from the spirit and scope of the technical solutions of the various embodiments of the present application.

## Claims

1. A fully electric aircraft, **characterized by** comprising:
an aircraft body provided with a flight cabin for carrying crew and passengers;
a frame provided on top of the aircraft body;
a plurality of fixed-pitch rotors connected to the frame, the plurality of fixed-pitch rotors being spaced apart around a vertical line where a center of gravity of the aircraft is located, wherein when the aircraft body is in flight, a rotation axis of each fixed-pitch rotor remains fixed relative to the aircraft body; and
two ducted fans connected to the frame and respectively located on left and right sides of the aircraft body, wherein when a yaw moment provided by the fixed-pitch rotors is imbalanced, the ducted fans provide a compensatory yaw moment to the aircraft body.

2. The fully electric aircraft according to claim 1, wherein:
the aircraft body is symmetrical about a predetermined axial plane, the axial plane being a vertical plane defined by a forward direction of the aircraft;
the two ducted fans are respectively located on two sides of the axial plane;
the number of the fixed-pitch rotors is six, the six fixed-pitch rotors are spaced apart around the vertical line where the center of gravity of the aircraft is located, and three of the six fixed-pitch rotors are provided on each side of the axial plane.

3. The fully electric aircraft according to claim 2, wherein when the aircraft is in flight, a rotation axis of each ducted fan remains fixed relative to the aircraft body.

4. The fully electric aircraft according to claim 2 or 3, wherein:
each fixed-pitch rotor has a rotor swept area;
when the aircraft is in flight, the rotor swept areas of the plurality of fixed-pitch rotors are located on at least two planes; and
when the aircraft is projected onto a horizontal plane in a level flight state, projections of the rotor swept areas of at least two adjacent fixed-pitch rotors partially overlap.

5. The fully electric aircraft according to any one of claims 2 to 4, further comprising:
a yaw control system electrically connected to the six fixed-pitch rotors and the two ducted fans, respectively,
wherein the yaw control system is configured to: when any one of the fixed-pitch rotors fails, control the two ducted fans to operate to provide the compensatory yaw moment to the aircraft body.

6. The fully electric aircraft according to claim 5, wherein:
in a circumferential distribution direction of the fixed-pitch rotors, lines sequentially connecting center points of the six fixed-pitch rotors form a polygon, and two fixed-pitch rotors located on a same diagonal of the polygon constitute a pair of corresponding fixed-pitch rotors; and
the yaw control system is configured to: when any one of the fixed-pitch rotors fails, control the fixed-pitch rotor corresponding to the failed fixed-pitch rotor to stop working, and control the two ducted fans to operate to provide the compensatory yaw moment to the aircraft body.

7. The fully electric aircraft according to claim 6, wherein:
the six fixed-pitch rotors comprise a first rotor, a second rotor, a third rotor, a fourth rotor, a fifth rotor, and a sixth rotor, and in the circumferential distribution direction of the six fixed-pitch rotors, the six fixed-pitch rotors are arranged in ascending order in a counterclockwise direction; and
the first rotor and the fourth rotor form a pair, the second rotor and the fifth rotor form a pair, and the third rotor and the sixth rotor form a pair.

8. The fully electric aircraft according to claim 7, wherein the first rotor, the third rotor, and the fifth rotor are configured to rotate in a first direction, and the second rotor, the fourth rotor, and the sixth rotor are configured to rotate in a second direction, the second direction being opposite to the first direction.

9. The fully electric aircraft according to any one of claims 2 to 8, wherein:
the six fixed-pitch rotors comprise a first rotor, a second rotor, a third rotor, a fourth rotor, a fifth rotor, and a sixth rotor, and in the circumferential distribution direction of the six rotors, the six fixed-pitch rotors are arranged in ascending order in a counterclockwise direction; and
when the aircraft is projected onto a horizontal plane in flight, projections of the third rotor and the sixth rotor are respectively located on two sides of the aircraft body in the forward direction, the first rotor is located at a front-right side of the aircraft body, the second rotor is located at a front-left side of the aircraft body, the fourth rotor is located at a rear-left side of the aircraft body, and the fifth rotor is located at a rear-right side of the aircraft body.

10. The fully electric aircraft according to claim 9, wherein:
when the aircraft is in a level flight state, an angle between a rotation axis of the third rotor and a vertical direction is greater than or equal to 5 degrees and less than or equal to 10 degrees, and a rotor tip of the third rotor inclines outward relative to the aircraft body; and/or
an angle between a rotation axis of the sixth rotor and the vertical direction is greater than or equal to 5 degrees and less than or equal to 10 degrees, and a rotor tip of the sixth rotor inclines outward relative to the aircraft body.

11. The fully electric aircraft according to claim 9 or 10, wherein rotation axes of the first rotor, the second rotor, the fourth rotor, and the fifth rotor are arranged along the vertical direction.

12. The fully electric aircraft according to any one of claims 9 to 11, wherein a rotor swept area of the third rotor is lower than a rotor swept area of either the second rotor or the fourth rotor; and/or a rotor swept area of the sixth rotor is lower than a rotor swept area of either the first rotor or the fifth rotor.

13. The fully electric aircraft according to any one of claims 2 to 12, wherein:
the frame comprises a support bracket and six arms, the support bracket is provided on the top of the aircraft body, the six arms are sequentially spaced along a circumferential direction of the support bracket, each arm extends relative to the support bracket in a direction away from a center of the support bracket; and
the six fixed-pitch rotors and the six arms are arranged in one-to-one correspondence, and each fixed-pitch rotor is provided on a corresponding arm.

14. The fully electric aircraft according to claim 13, wherein each arm is foldably connected to the support bracket, the arm rotates relative to the support bracket to deploy into an extended state, and the arm rotates relative to the support bracket and stacks on an outer periphery of the support bracket to form a folded state.

15. The fully electric aircraft according to claim 14, wherein:
the six fixed-pitch rotors comprise a first rotor, a second rotor, a third rotor, a fourth rotor, a fifth rotor, and a sixth rotor, and in the circumferential distribution direction of the six rotors, the six rotors are arranged in ascending order in a counterclockwise direction; and
in the folded state, the two arms corresponding to the third rotor and the sixth rotor are stacked on a side of the four arms corresponding to the first rotor, the second rotor, the fourth rotor, and the fifth rotor facing the ground.

16. The fully electric aircraft according to claim 15, wherein:
the aircraft body has two side portions respectively on two sides in the forward direction;
the six arms comprise a first arm and a second arm, the first arm and the second arm are disposed in one-to-one correspondence with the two side portions of the aircraft body;
the third rotor is connected to the first arm, and the sixth rotor is connected to the second arm; and
the two ducted fans comprise a first ducted fan and a second ducted fan, the first ducted fan is connected to the first arm, and the second ducted fan is connected to the second arm.

17. The fully electric aircraft according to claim 16, wherein:
when the aircraft is in a level flight state, the first arm has a top side and a bottom side opposite to each other, the bottom side of the first arm faces the ground, the first ducted fan is mounted on the bottom side of the first arm, and the third rotor is mounted on the top side of the first arm;
the first ducted fan has a rotation center, a hub of the third rotor has a first maximum rotation plane when rotating, and when the aircraft is projected onto a horizontal plane, a projection of the first maximum rotation plane covers the rotation center of the first ducted fan; and/or
when the aircraft is in flight, the second arm has a top side and a bottom side opposite to each other, the bottom side of the second arm faces the ground, the second ducted fan is mounted on the bottom side of the second arm, and the sixth rotor is mounted on the top side of the second arm; and
the second ducted fan has a rotation center, a hub of the sixth rotor has a second maximum rotation plane when rotating, and when the aircraft is projected onto the horizontal plane, a projection of the second maximum rotation plane covers the rotation center of the second ducted fan.

18. The fully electric aircraft according to any one of claims 2 to 17, wherein when the aircraft is in the level flight state, an angle between a rotation axis of the ducted fan and the horizontal plane is less than or equal to 5 degrees.

19. The fully electric aircraft according to any one of claims 2 to 18, wherein a foldable rotor comprises at least two blades and a hub, the foldable rotor is the fixed-pitch rotor, the two blades are connected to opposite sides of the hub, the two blades are rotatably disposed, and the two blades approach each other to form a stacked state, or move away from each other to form an extended state.

20. The fully electric aircraft according to any one of claims 1 to 19, further comprising:
a docking mechanism,
wherein the docking mechanism is provided on a side of the aircraft body away from the forward direction of the aircraft, the docking mechanism is adapted to cooperate with an external towing mechanism, so that the aircraft body moves under a towing action of the external towing mechanism.

21. The fully electric aircraft according to any one of claims 1 to 20, wherein the docking mechanism comprises a mating ring, the mating ring is rotatably connected to a side of a chassis of the aircraft body facing the ground, and the mating ring rotates relative to the chassis of the aircraft body along the vertical line.

22. The fully electric aircraft according to any one of claims 1 to 21, further comprising:
at least two landing gear mechanisms, the two landing gear mechanisms being spaced side-by-side along the forward direction on the aircraft body, each landing gear mechanism comprising:
two landing gears, the two landing gears being respectively rotatably connected to two sides of the aircraft body in the forward direction of the aircraft; and
two actuators, the two actuators being disposed in one-to-one correspondence with the two landing gears, each actuator being connected between a corresponding landing gear and the aircraft body, the actuator driving the landing gear to rotate away from the aircraft body to deploy into a supporting state, or driving the landing gear to rotate toward the aircraft body to form a folded state.

23. A flight control method for an aircraft, **characterized in that** the flight control method is configured to control flight of the aircraft, the aircraft comprises an aircraft body, a plurality of fixed-pitch rotors and two ducted fans, the plurality of fixed-pitch rotors are configured to provide lift, thrust, and yaw moment to the aircraft body, the two ducted fans are respectively located on left and right sides of the aircraft body, and the flight control method comprises:
obtaining a target yaw moment of the aircraft;
obtaining a first yaw moment generated by the plurality of fixed-pitch rotors during flight of the aircraft;
when a difference between the first yaw moment and the target yaw moment is greater than a specified value, determining a compensatory yaw moment based on the difference; and
controlling the ducted fans to operate based on the compensatory yaw moment, wherein a difference between a sum of a second yaw moment generated by the operating ducted fans and the first yaw moment, and the target yaw moment is less than or equal to the specified value.

24. The flight control method according to claim 23, wherein the obtaining the first yaw moment generated by the plurality of fixed-pitch rotors during flight of the aircraft comprises:
obtaining working parameters of each fixed-pitch rotor and fault index parameters of the fixed-pitch rotors during flight of the aircraft, wherein the fault index parameters are monitored by a fault self-diagnosis system of the aircraft, and the fault index parameters characterize a degree of fault occurrence in the fixed-pitch rotors; and
obtaining the first yaw moment generated by the plurality of fixed-pitch rotors based on the working parameters and the fault index parameters when it is determined that at least one of the plurality of fixed-pitch rotors has a fault.

25. The flight control method according to claim 24, wherein the number of the fixed-pitch rotors is six, the six fixed-pitch rotors are arranged in pairs in correspondence, and rotation directions of the two correspondingly arranged fixed-pitch rotors are opposite;
when a single fixed-pitch rotor among the plurality of fixed-pitch rotors has a fault, the obtaining the first yaw moment generated by the plurality of fixed-pitch rotors based on the working parameters and the fault index parameters when it is determined that at least one of the plurality of fixed-pitch rotors has a fault comprises:
controlling the fixed-pitch rotor corresponding to the faulty fixed-pitch rotor to stop working based on the working parameters and the fault index parameters when it is determined that one fixed-pitch rotor among the plurality of fixed-pitch rotors has a fault; and
obtaining the first yaw moment jointly generated by other fixed-pitch rotors excluding the faulty fixed-pitch rotor and its corresponding fixed-pitch rotor.

26. The flight control method according to any one of claims 23 to 25, wherein:
the obtaining the target yaw moment of the aircraft comprises:
obtaining a current yaw angle and a target yaw angle of the aircraft; and
determining the target yaw moment of the aircraft based on the current yaw angle and the target yaw angle;
the controlling the ducted fans to operate based on the compensatory yaw moment comprises:
determining a target power of the ducted fans based on the compensatory yaw moment;
determining a target rotation speed of the ducted fans based on the target power and dimensions and aerodynamic efficiency of the ducted fans; and
controlling the ducted fans to operate based on the target rotation speed to cause the ducted fans to generate the second yaw moment.
